(19) Europäisches Patentamt
European Patent Office
Office européen des brevets

(11) **EP 1 051 816 B1**

(12) **EUROPÄISCHE PATENTSCHRIFT**

(45) Veröffentlichungstag und Bekanntmachung des Hinweises auf die Patenterteilung:
**29.05.2002 Patentblatt 2002/22**

(21) Anmeldenummer: **98966591.4**

(22) Anmeldetag: **31.12.1998**

(51) Int Cl.⁷: **H04B 15/04**

(86) Internationale Anmeldenummer:
**PCT/DE98/03811**

(87) Internationale Veröffentlichungsnummer:
**WO 99/35769 (15.07.1999 Gazette 1999/28)**

(54) **VORRICHTUNG ZUR STÖRARMEN SIGNALÜBERTRAGUNG**

DEVICE FOR TRANSMITTING SIGNALS WITH LOW-INTERFERENCE

DISPOSITIF POUR LA TRANSMISSION DE SIGNAUX AVEC UN FAIBLE NIVEAU DE BROUILLAGE

(84) Benannte Vertragsstaaten:
**DE FR GB IT NL SE**

(30) Priorität: **31.12.1997 DE 19758256**

(43) Veröffentlichungstag der Anmeldung:
**15.11.2000 Patentblatt 2000/46**

(73) Patentinhaber: **Schleifring und Apparatebau GmbH**
**82256 Fürstenfeldbruck (DE)**

(72) Erfinder: **LOHR, Georg**
**D-82223 Eichenau (DE)**

(74) Vertreter: **Münich, Wilhelm, Dr.**
**Dr. Münich & Kollegen**
**Anwaltskanzlei**
**Wilhelm-Mayr-Strasse 11**
**80689 München (DE)**

(56) Entgegenhaltungen:
**EP-A- 0 163 313          EP-A- 0 505 771**

**Beschreibung**

**Technisches Gebiet**

Die Erfindung betrifft eine Anordnung bzw. ein Verfahren zur Verbesserung der elektromagnetischen Verträglichkeit (EMV) von Datenverbindungen und insbesondere von digitalen Datenverbindungen.

**Stand der Technik**

Die Anwendungsgebiete von digitalen Datenverbindungen erweitern sich kontinuierlich. Die digitale Signalübertragung weist in den meisten Fällen gegenüber der analogen Signalübertragung signifikante Vorteile auf. Die Kosten für Hochgeschwindigkeitsdatenkanäle verringern sich mit der Entwicklung von neuen Übertragurigstechniken. Die Einzelkanalbandbreite wurde sehr kostengünstig, so daß das Multiplexen von mehreren Niedriggeschwindigkeitssignalleitungen in eine einzelne Hochgeschwindigkeitssignalleitung häufig die ökonomischste Lösung ist. Dies wurde insbesondere bei Hochgeschwindigkeitsdrehverbindern verwirklicht.

Die klassische Lösung zur Übertragung von großen Datenvolumina von sich drehenden zu stationären Teilen war die parallele Verwendung einer großen Anzahl von Schleifringwegen. Dies führte zu einer massiven Bauweise mit sehr hohem Gewicht und hohen Kosten. Mechanische Schleifringe eignen sich besonders zur Energieübertragung, aber für die Übertragung großer Datenmengen weisen sie einige signifikante Nachteile wie Bandbreitenbegrenzung, Kontaktrauschen und Ausfälle auf.

Infolge der großen Anzahl von Wegen mit einer Datenübertragungskapazität nahe an den physikalischen Grenzen der kontaktierenden Schleifringwege waren Lebensdauer und Instandhaltung ein Hauptanliegen. Die neuen kontaktlosen Hochgeschwindigkeitsverbindungen überwinden alle diese Probleme und ermöglichen instandhaltungsfreie Lebensdauern mit höchster Übertragungsqualität und beinahe unbegrenzter Bandbreite.

Ein sehr wichtiger Aspekt nicht nur bei der Anwendung von kontaktlosen Hochgeschwindigkeitsverbindungen, sondern von jeder elektronischen Vorrichtung ist die elektromagnetische Verträglichkeit. Elektromagnetische Emissionen bzw. Aussendungen sind am meisten bei drahtbasierenden Verbindungen und nicht abgeschirmten Drehverbindern kritisch, aber selbst Sender, Empfänger und Verstärker bei auf Glasfaser basierenden Verbindungen können elektromagnetische Felder aussenden.

**Darstellung der Erfindung**

Erfindungsgemäß wird beschrieben wie die elektromagnetische Verträglichkeit (EMV) inbesondere von Hochgeschwindigkeitsdatenverbindungen von den gesendeten Signalen abhängt und wie diese Signale in einer derartigen Weise abgeändert werden können, so daß die elektromagnetischen Emissionen minimiert werden. Die erfindungsgemäße Vorrichtung bzw. das erfindungsgemäße Verfahren ist ebenfalls für die Anwendung von kontaktlosen Hochgeschwindigkeitsdatenverbindungen insbesondere bei sehr großen offenen Einheiten wesentlich, wie die, welche für Computertomographen (CT-Abtasteinrichtungen) entworfen wurden.

Die Übertragung von beliebigen Signalen und insbesondere digitaler Signale erfolgt dem Stand der Technik entsprechend im Basisband oder moduliert, überwiegend in Form von mehr oder weniger steilflankigen, rechteckförmigen Signalfolgen. Diese Signalfolgen haben in Abhängigkeit der jeweiligen Codierung ein ausgeprägtes, breites Linienspektrum. Dieses Spektrum kann bereits bei geschlossenen oder geschirmten Systemen, aber insbesondere bei offenen Systemen wie Drehübertragern, zu Störstrahlungen führen, welche über die in den gängigen EMV-Normen festgesetzten Grenzwerte hinausgehen können. Besonders problematisch sind hier kontaktlose, offene Übertragungssysteme, wie sie z.B. auch zur linearen Übertragung oder zur Drehübertragung angewendet werden. Explizit betroffen hiervon sind auch Leckleitungssysteme.

Zur Verringerung des Störpegels sind verschiedene Maßnahmen bekannt. So kann durch eine Tiefpaß- oder auch Bandpaßfilterung der übertragene Frequenzbereich eingeschränkt werden. Häufig ist dieses aber gerade bei breitbandigen Übertragungssystemen, wie z.B. einer Übertragung mit 200 MBaud, nur schwer möglich. So wird bei einer 200 MBaud-Strecke mindestens eine Bandbreite von 140 MHz benötigt. Eine weitere Maßnahme ist die Verringerung des übertragenen Signalpegels. Diese führt aber zu einem schlechteren Signal-Rauschabstand und damit auch bei digitalen Systemen zu einer Verschlechterung der Bitfehlerrate. Mit den dem Stand der Technik entsprechenden Maßnahmen ist es nur schwer möglich, die EMV-Eigenschaften einer solchen Übertragungsstrecke zu verbessern, ohne die Übertragungseigenschaften selbst zu beeinträchtigen.

Aus der EP 0 163 313 A2 ist ein Verfahren und eine Vorrichtung zur spektralen Verteilung der ausgestrahlten Energie eines Digitalsytems bekannt. Es handelt sich dabei um eine Lösung, deren Bestandteile in jedem Personalcomputer heutzutage anzutreffen sind. Dabei handelt es sich um einen Generator, der das Spektrum von Signalen aufweitet. Für die Übertragung von Signalen zwischen räumlich getrennten und vorzugsweise gegeneinander beweglichen Sendern und Empfängern ist diese Lösung nicht geeignet.

Eine Vorrichtung gemäß Teilen der oben beschriebenen Lösung ist aus der EP 0 505 771 A1 bekannt. Hier wird das Ausgangssignalspektrum des Senders verbreitert und damit die spektrale Leistungsdichte des Senderausgangssignals reduziert. Diese Lösung drückt die Signale gewissermaßen zusammen und schiebt sie damit in die Länge. Damit wird die Signalbandbreite sogar wesentlich verändert. Aufgabe der nachfolgend beschriebenen Lösung ist es jedoch eine Anordnung und ein Verfahren zur störarmen Signalübertragung eines Signals bereitzustellen, bei dem die zur Verfügung stehende Signalbandbreite nicht oder nur unwesentlich verändert wird.

Aufgabe der Erfindung ist es daher, eine digitale Übertragungsstrecke, insbesondere kontaktlose Drehübertragungsstrecke, derart zu gestalten, daß die abgestrahlten Störpegel im Sinne der derzeit gültigen EMV-Normen verringert werden, ohne die Übertragungsqualität entsprechend zu beeinträchtigen.

Diese Aufgabe wird mit den im Anspruch 1 angegebenen Mitteln gelöst. Erfindungsgemäß wird z.B. durch eine Modulation des Übertragungstaktes das übertragene Linienspektrum des Signals so verbreitert, daß die Lücken zwischen den einzelnen Spektrallinien aufgefüllt werden und somit die mittlere spektrale Leistungsdichte verringert wird. Eine erfindungsgemäße Anordnung besteht aus einem dem Stand der Technik entsprechenden Sender, welcher einen Taktgenerator enthält sowie einer zusätzlichen Modulationseinheit, welche den Sender bzw. dessen Taktgenerator oder das Senderausgangssignal an einer beliebigen Stelle der Übertragungsstrecke derart ansteuert, daß das Spektrum verbreitert wird. Eine derartige Ansteuerung kann z.B. eine Phasen- oder auch Frequenzmodulation sein. Möglich sind aber auch Amplituden oder andere Modulationsverfahren. Weiterhin ist eine zusätzliche Steuereinheit vorhanden, die der Modulationseinheit das Modulationssignal liefert.

Dabei grenzt sich die Erfindung eindeutig von einer nach dem Stand der Technik bekannten Modulation zur Verbesserung der EMV-Eigenschaften einer integrierten Schaltung nach einer Veröffentlichung der Fa. IC Works, 3725 North First Street, San Jose, CA USA vom März 1997 mit dem Titel "SPREAD SPECTRUM CLOCK GENERATOR" ab. Die Veröffentlichung bezieht sich auf die Verbesserung der EMV-Eigenschaften bei Rechnerplatinen und nicht bei Übertragungsstrecken.

Einfluß einer spektralen Aufspreizung auf EMV-Eigenschaften

Der allgemeine Begriff Elektromagnetische Verträglichkeit (EMV) ist sehr schwer zu definieren. Es wird auf den sehr allgemeinen Standard CISPR 11 Bezug genommen. Dieser Standard definiert Grenzwerte für die maximale Emission von elektromagnetischer Energie und gibt die geeigneten Meßverfahren an. Dieser Standard bestimmt eine Messung für ausgestrahlte Emissionen in dem Frequenzbereich von 30 MHz bis 1 GHz. Die ausgestrahlte Leistung wird in Schritten von 120 kHz mit einer Bandbreite von 120kHz gemessen. Bei der Anwendung einer spektralen Aufspreizungstechnik ist es nicht unbedingt notwendig, ein gleichmäßig verteiltes Breitbandspektrum aufzuweisen; es ist nur notwendig darauf zu achten, daß jeder 120 kHz-Bereich dieselbe Energie zugeführt bekommt. Dies kann durch ein Breitbandsignal oder einen einzelne Schmalbandspitze in diesem Bereich erreicht werden. Für die meisten Anwendungen ist das Aufspreizen dieses Spektrums in Linien mit einem Abstand von 120 kHz oder mit einem Sicherheitsabstand 100 kHz voneinander die kostengünstigste Lösung. Weiteres Spreizen dieses Spektrums erfordert die Einführung sehr niedriger Frequenzveränderungen in dem Datenstrom. Bei einigen Anwendungen treten diese Veränderungen natürlicherweise auf, z.B. wenn "Echtdaten" wie Videosignale übertragen werden. Aber es sollte Sorge dafür getragen werden, daß in Extremsituationen, wenn z.B. das Videosignal ausgeschaltet ist und nur digitale Nullen übertragen werden, das Spektrum breit genug gespreizt wird, um die EMV-Vorschriften zu erfüllen.

Bei der Verwendung von Hochgeschwindigkeitsdigitaldatenverbindungen muß beträchtliche Vorsorge getroffen werden, um die Erfordernisse der internationalen EMV-Regelungen zu erfüllen. Mit Datenraten von einigen Hundert bis zu mehreren Tausend MBaud liegt die Grundfrequenz in dem Bereich allgemeiner Übertragungs-, Radio- und Fernseh-Bändern. Zur allgemeinen Verringerung von Interferenzen ist es besser die Informationen mit einem Breitbandsignal mit gleichmäßig verteilter niedriger spektraler Leistungsdichte zu übertragen, anstatt daß die Informationen einige diskrete Spektrallinien mit großer Leistung aufweisen.

Die Erfindung beschreibt wie allgemein verwendete digitale Datenverbindungen in einer derartigen Weise abgeändert werden können, daß das Spektrum signifikant aufgespreizt wird.

Es bestehen zwei sich ergänzende Verfahren, um dies zu erreichen. Das erste Verfahren ist die geeignete Codierung des digitalen Signals. Das weitere Verfahren ist eine Art von Frequenzmodulation. Diese Frequenzmodulation kann überall in der Verbindung ausgeführt werden, ohne daß Sender oder Empfänger beeinflußt werden.

Erfindungsgemäß wird die herkömmliche Datencodierung zur Optimierung der EMV-Eigenschaften der Verbindung vorteilhaft weitergeführt.

Aufspreizen des Trägersignals (Datentaktsignals) des Senders.

Im Sender kann der Datenzeitverlauf einfach durch Steuerung des Senderträgersignals gesteuert werden.

Dies erfordert direkten Zugriff auf das Senderträgersignal. Eine herkömmliche Lösung ist das Ersetzen der Standardquarzoszillatoreinheit durch einen neumodulierten Oszillator in derselben Einheit.

In einer besonders vorteilhaften Ausgestaltung der Erfindung ist die Modulationseinheit derart gestaltet, daß sie die Taktfrequenz des Taktgenerators des Senders entsprechend den Modulationssignalen der Steuereinheit frequenzmoduliert. Eine solche Ausgestaltung ist technisch besonders einfach möglich, indem im frequenzbestimmenden Element des Taktgenerators ein VCO angeordnet wird, welcher in Abhängigkeit von der an ihm anliegenden Steuerspannung die Frequenz des Taktgenerators verändert. Die Steuerspannung dieses VCO wird durch die Steuereinheit vorgegeben. Liefert die Steuereinheit nun ein niederfrequentes Signal, so ändert sich im Takte dieses Signals ebenso die Frequenz des Taktgenerators des Senders, sie wird damit frequenzmoduliert.

## Frequenzmodulation

Frequenzmodulation ist der direkte Weg zur Aufspreizung des Spektrums. Serielle Standardübertragungsstrecken wie TAXIchip® oder Hot-Link® tolerieren eine statische Taktfrequenzabweichung von $\pm 0.1\%$. Um die Grenzen für Quarzoszillatortoleranzen einzuhalten, sollte die maximale Frequenzänderung weniger als $10^{-4}$ sein. Da wie vorstehend beschrieben eine Spreizung von Spektrallinien unterhalb 100 kHz keinen Vorteil bringt, ist die minimale Datenrate $f_{Dmin}$ für langsame Frequenzhübe

$$f_{DMin} = \frac{100\,kHz}{10^{-4}} = 1\,GHz \qquad (6)$$

aus der Formel

$$f_{Min} = \frac{f_{Data}}{n_{Frame}} \qquad (3)$$

wobei $n_{Frame}$ die Anzahl von Bits in Datenblöcken, $f_{Date}$ die Datentaktfrequenz und $f_{Min}$ die untere Frequenzgrenze ist.

Dies zeigt, daß langsame Frequenzhübe bei Datenraten unterhalb 1 Gbaud keine Verbesserung bringen.

## Phasenmodulation

Phasenmodulation wird einfach durch Einfügen einer gesteuerten elektrischen Verzögerung in das Trägersignal (bzw. Taktsignal) erzielt. Eine niedrige Frequenz- bzw. Phasenmodulation kann durch den Empfänger PLL nachgesteuert werden, erzeugt aber keine signifikante Spreizung des Spektrums. Eine sehr hohe Frequenzphasenmodulation hat die erwünschte Wirkung auf das Spektrum, verhält sich aber wie eine zusätzliche Synchronisationsstörung des Empfängereingangs.

In einer weiteren vorteilhaften Ausgestaltung der Erfindung wird die Modulationseinheit hinter den signalverarbeitenden und modulierenden Stufen des Senders angeordnet, so daß sie das Ausgangssignal des Senders direkt modulieren kann.

## Modulation des Datenstroms

Erfindungsgemäß kann das Spektrum auch durch Modulation des Senderausgangssignals (bzw. des Datenstroms) aufgespreizt werden. Die Modulation oder Modifizierung des Senderausgangssignals (bzw. des Datenstroms) selber weist einen großen Vorteil gegenüber der Modifizierung des Senderträgersignals (bzw. Senderdatentakstsignals) auf. Es ist keine Modifizierung im Sender selber notwendig. Das Senderausgangssignal (bzw. der Datenstrom) kann überall auf der Übertragungsstrecke modifiziert werden. So bedarf dieses System keiner Veränderung des Designs des Senders, wodurch Entwicklungskosten niedrig gehalten werden und eine nahtlose Integration in vorhandene Designs ermöglicht wird.

In einer weiteren vorteilhaften Ausgestaltung der Erfindung enthält der Sender eine durch den Steuergenerator steuerbare Verzögerungsschaltung, welche einzelne Pulse oder auch nur Signalflanken des Ausgangssignals, proportional zu einer vom Steuergenerator vorgegebenen niedrigen Modulationsfrequenz, verzögert. Im Sinne der Erfindung wird unter dem Begriff Sender die Zusammenfassung aller Einheiten verstanden, welche Daten, Signale bzw. Takte derart aufbereiten und zusammenfassen, daß sie über die Übertragungsstrecke selbst übertragen werden können. Im Sinne der Erfindung spielt es keine Rolle, ob diese Verzögerung im Taktgenerator des Senders oder in einer späteren Stufe oder erst in einer Treiberschaltung für die Übertragungsstrecke erfolgt.

Phasenschiebeverfahren

Der beste Weg zur Modifizierung eines vorhandenen Datenstroms ohne Beeinflussung des Datensenders ist also eine gesteuerte Verzögerung einzuführen. Der Datenstrom wird einer Verzögerungssteuereinrichtung zugeführt, die den Datenstrom analysiert und ein Steuersignal $V_P$ für die gesteuerte Verzögerungsschaltung erzeugt. Diese Schaltung verzögert den Datenstrom für eine durch Vp gegebene Zeit. Eine beinahe statische Verzögerung, die durch eine niedrige Frequenz moduliert wurde, entspricht einer Phasenmodulation. Diese Art der Phasenmodulation hat nur eine geringe Wirkung auf die Breite des Spektrums. Bei einer Phasenmodulation ist die Breite des Spektrums von der Modulationsfrequenz weitgehend unabhängig. Deshalb muß zur Aufspreizung des Spektrums der Modulationswinkel erhöht werden. Eine höhere Modulation erfordert spezielle Schaltungen mit Speicherelementen und diese kann durch einfache Verzögerungselemente nicht mehr verwirklicht werden. Vorteilhafter ist eine Art von Frequenzmodulation. Frequenzmodulation ist ein Spezialfall der Phasenmodulation mit über die Zeit integrierten Phasenwinkeln.

Weiterhin kann die Phasenverschiebung vorteilhaft durch ein Taktregenerierungsverfahren vorgenommen werden.

Zusätzlich kann vorteilhaft zu der Modulation durch die Modulationseinheit eine Datenkodierung mittels Pseudozufallsrauschen vorgenommen werden.

In einer weiteren vorteilhaften Ausgestaltung der Erfindung befindet sich im Empfänger eine Steuereinheit, welche den Taktgenerator des Empfängers synchron zur Modulation des Senders steuert. Diese Synchronisation kann wahlweise über ein für Sende- und Empfangsseite gemeinsam verfügbares Signal, wie z.B. die Netzfrequenz, erfolgen.

In einer weiteren vorteilhaften Ausgestaltung der Erfindung befindet sich im Empfänger eine Steuereinheit, welche im Falle der Modulation der Frequenz des Taktgenerators des Senders den Taktgenerator des Empfängers synchron zu dieser Modulation steuert, so daß das Empfangssignal im Empfänger unmoduliert weiterverarbeitet werden kann.

In einer weiteren vorteilhaften Ausgestaltung der Erfindung wird parallel zur Übertragungsstrecke zwischen Sender- und Empfängerseite ein zusätzliches Signal zur Steuerung der Modulation übertragen. Durch dieses zusätzliche Signal kann nun im Empfänger eine Demodulation erfolgen, welche zur Modulation im Sender synchron ist.

## Kurze Beschreibung der Zeichnung

Zur Erläuterung der Erfindung sind noch Figuren angefügt. Diese zeigen:

Fig. 1     erfindungsgemäße Anordnung,

Fig. 2     Störspektrum einer typischen Übertragungsstrecke mit 190 MBaud im Basisband,

Fig. 3     Störspektrum der Übertragungsstrecke aus Fig.2 mit einer Frequenzmodulation des Taktgenerators,

Fig. 4     ein 200 MBaud 1010-PCM-Signal (obere Kurve) und ein Bittaktsignal (untere Kurve),

Fig. 5     das Spektrum von 0 bis 1 GHz eines 200 MBaud 1010-PCM-Signals,

Fig. 6     ein 200 Mbaud PCM-Signal mit 10000100-Muster (obere Kurve) und Bittaktsignal (untere Kurve),

Fig. 7     das Spektrum von 0 bis 1 GHz eines 200 MBaud PCM-Signals (10000100),

Fig. 8     das Spektrum eines normalen 200 Mbaud PCM-Signals (schmale Kurve) und eines 200 Mbaud PCM-Signals mit frequenzmoduliertem Bittaktsignal (breite Kurve) bei einer angezeigten Mittenfrequenz von 100 MHz und Abstand von 10 MHz,

Fig. 9     das 200 Mbaud PCM-Signal von Fig. 8 (obere Kurve) mit frequenzmoduliertem Bittaktsignal (unter Kurve),

Fig. 10    ein 200 Mbaud PCM-PN7-Spektrum (Pseudorauschen mit 128 Bit Musterlänge) mit Spitzenamplitude von -36 dBm und Linienbeabstandung von 1,56 MHz,

Fig. 11    ein 200 Mbaud PCM-PN15-Spektrum (Pseudorauschen mit 32768 Bit Musterlänge) mit Amplitude von -60 dBm und Linienbeabstandung von 6,1 KHz,

Fig. 12    ein 200 Mbaud-PCM-PN17-Spektrum (Pseudorauschen mit 131072 Bit Musterlänge) mit Amplitude bei -54 dBm und Linienbeabstandung von 1,5 KHz,

Fig. 13    eine Zufallskodierung (obere drei Kurven) und Dekodierung (untere drei Kurven), wobei das Kodieren durch eine Exklusiv-Oder-Verknüpfung der Daten mit einer Pseudorauschfolge erfolgt,

Fig. 14    eine gesteuerte Phasenschiebeeinrichtung,

Fig. 15    eine 200 Mbaud PCM-Grundfrequenz bei 100 MHz (schmale Spitze) und das Spektrum eines phasenmodulierten Signals mit 6,28 rad bei 10 KHz (breitere Spitze),

Fig. 16    eine 200 Mbaud PCM-Grundfrequenz bei 100 MHz (schmale Spitze) und ein Spektrum eines freqeuenzmodulierten Signals mit 1 MHz (breite Spitze),

Fig. 17    ein einfaches frequenzmoduliertes Signal,

Fig. 18    ein verdoppeltes Spektrum,

Fig. 19    ein FM-gespreiztes Spektrum bei niedrigem Frequenzhub,

Fig. 20    ein FM-PCM-Signal (obere Kurve) und ein Bittaktsignal (untere Kurve) mit niedrigem Frequenzhub,

Fig. 21    eine Modulation mittels Taktregenerierung,

Fig. 22    ein 200 MBaud 1010-PCM-Signalspektrum von 0 bis 1 GHz,

Fig. 23    ein 200 MBaud 1010-PCM-Signalspektrum mit 8B/10B -Kodierung von 0 bis 1 GHz,

Fig. 24    ein 200 MBaud 1010-PCM-Signalspektrum mit 8B/10B -Kodierung und FM von 0 bis 1 GHz, und

Fig. 25    ein 200 MBaud 1010-PCM-Signalspektrum mit Pseudorauschkodierung von 0 bis 1 GHz.

**Beschreibung von Ausführungsbeispielen**

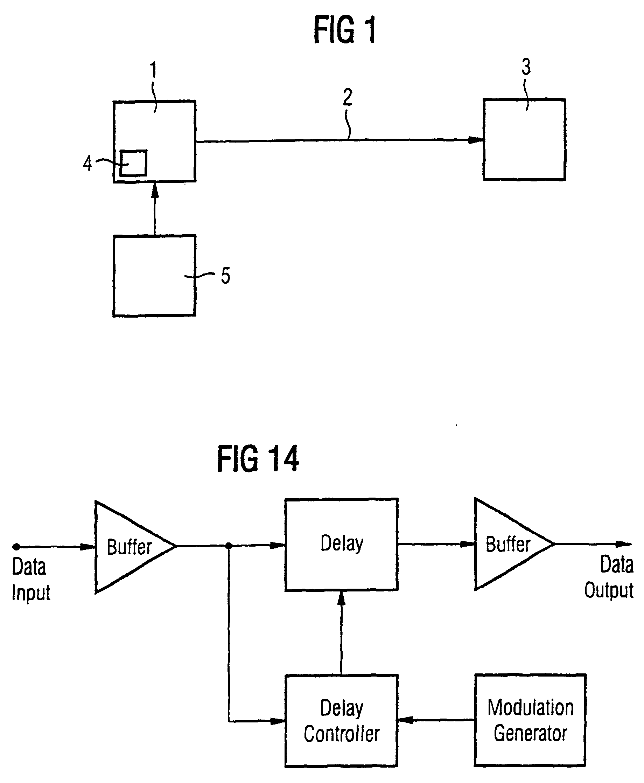

Fig. 1 zeigt eine erfindungsgemäße Anordnung bestehend aus einem Sender (1), welcher über die Übertragungsstrecke (2) mit dem Empfänger (3) verbunden ist. Der Sender (1) enthält einen Modulator (4) und wird über die Steuereinheit (5) gesteuert. Durch diese Steuereinheit wird nun das Modulationssignal zur Modulation des Signals des Senders bzw. der Frequenz des Taktgenerators derart erzeugt, daß das Spektrum des Ausgangssignals, welches über den Datenkanal (2) übertragen wird, verbreitert wird. Für dem Stand der Technik entsprechende Empfängerschaltungen ist eine geringfügige Modulation, insbesondere eine Frequenzmodulation des Sendersignals kein Problem. Die Änderung der Frequenz, insbesondere bei einer niedrigen Modulationsfrequenz, wird problemlos durch die zur Daten- und Taktrekonstruktion im Empfänger vorhandene PLL ausgeregelt.

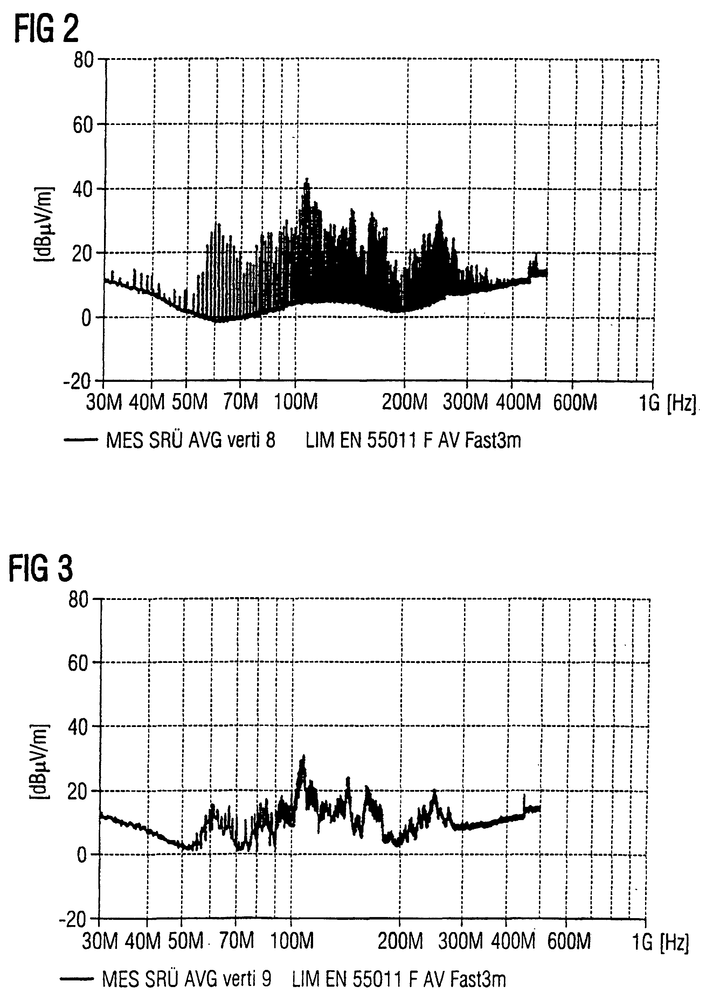

Fig. 2 zeigt das in einer Absorberhalle gemessene Spektrum, welches von einem dem Stand der Technik entsprechenden Sender über die Datenstrecke (2) abgestrahlt wird.
Fig. 3 zeigt das Spektrum einer erfindungsgemäßen Anordnung, wobei durch den Steuergenerator das Signal des Senders mit einem Frequenzhub von 2 MHz moduliert wird. Dadurch fallen auch spektrale Anteile in die Lücken zwischen den Spektrallinien. Bei einer gleichen Ausgangssignalamplitude wird die Leistungsdichte bei den einzelnen Frequenzen dadurch verringert. Die Verringerung der maximalen Amplitude liegt bei etwa 16 dB.

Frequenzspektrum digitaler Signale

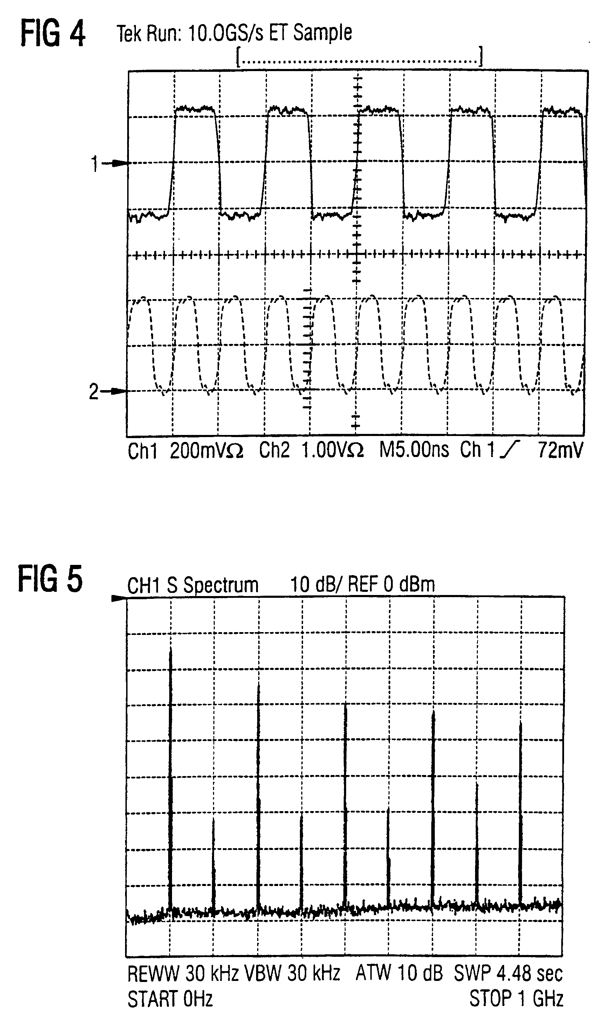

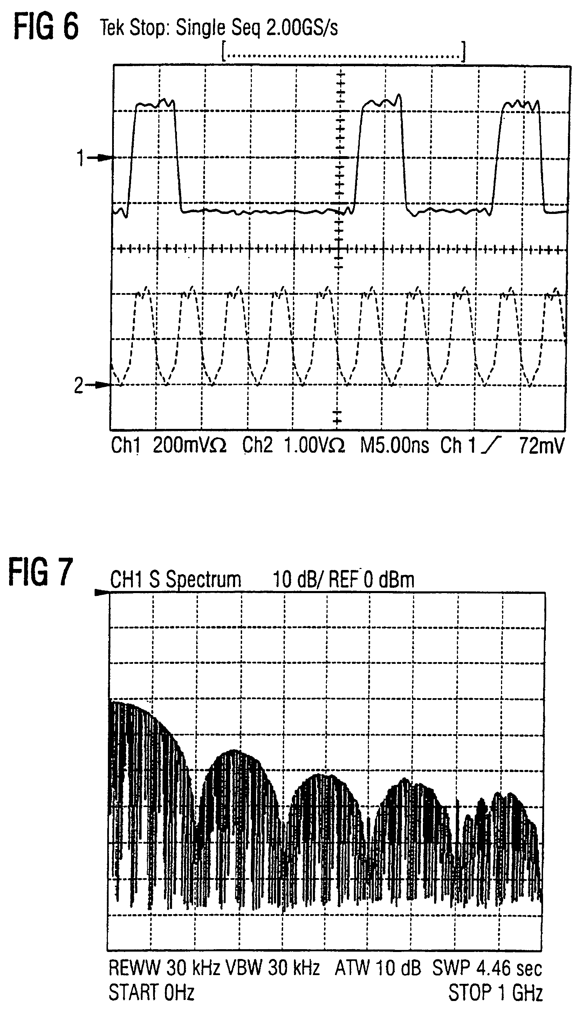

Wie bei beinahe jeder digitalen Datenverbindung ist der Datenstrom im PCM-Format, was bedeutet, daß nur zwei digitale Pegel, nämlich null und eins vorliegen. Die Informationen sind in dem Vorhandensein von Nullen und Einsen in bestimmten Zeitfenstern enthalten. Für ein Signal mit abwechselnden Nullen und Einsen entspricht die Wellenform einer symmetrischen Rechteckwelle (Fig. 4) mit einer Frequenz, die der Hälfte der Bittaktrate entspricht.
Ein derartiges Signal weist das hinreichend bekannte Spektrum auf, welches in Fig. 5 dargestellt ist.
Es zeigen sich nur ungerade harmonische mit linear sinkender Amplitude. Gerade harmonische treten nur auf, falls das Signal unsymmetrisch ist. Weist das Signal andere Muster mit größeren Zeitintervallen von Nullen und Einsen wie das Signal in Fig. 6 auf, dann erscheinen in dem Spektrum Seitenbänder mit Offsets von mehrfachen der Frequenzkomponenten dieser längeren Zeitintervalle. Dies führt von einem einfachen Nadelspektrum zu einem mehrdiversifiziertem Spektrum wie es in Fig. 7 dargestellt ist.

Liegen viele unterschiedliche Muster wie in unterschiedlichen Kombinationen vor wird das Spektrum mehr und mehr diversifiziert. Für die meisten digitalen Signale ist die durchschnittliche elektrische Leistung der Daten konstant. Bei einer Messung über einem längeren Zeitintervall sind die Anzahlen von Nullen und Einsen annähernd gleich. So ist die durchschnittliche Leistung $P_{Mean}$ eines zufälligen binären Signals die mittlere Leistung von null $P_0$ und von eins $P_1$.

$$P_{Mean} = \frac{1}{2} \cdot (P_0 + P_1) \tag{1}$$

Bei einer spektralen Darstellung der Summe aller Amplituden $\bar{A}_i$ der spektralen Linien muß diese deshalb gleich diesem Wert sein:

$$P_{Mean} = \sum_i \overline{A_i} \tag{2}$$

Verringerung der spektralen Leistungsdichte

Bei unserem ersten Beispiel (Fig. 4) mit einem Muster 1010 liegen hohe Energiepegel an der Basisfrequenz des Signals und deren Harmonischen vor. Falls das Signal zu zusätzlichen Frequenzen gespreizt wird, muß dann die Energie der einzelnen Spektrallinien sinken, da die Gesamtenergie konstant ist. So führt theoretisch das unbegrenzte Aufspreizen der Bandbreite zu unbegrenzt niedrigen Energiedichten. In der Praxis gibt es jedoch einige Begrenzungen.

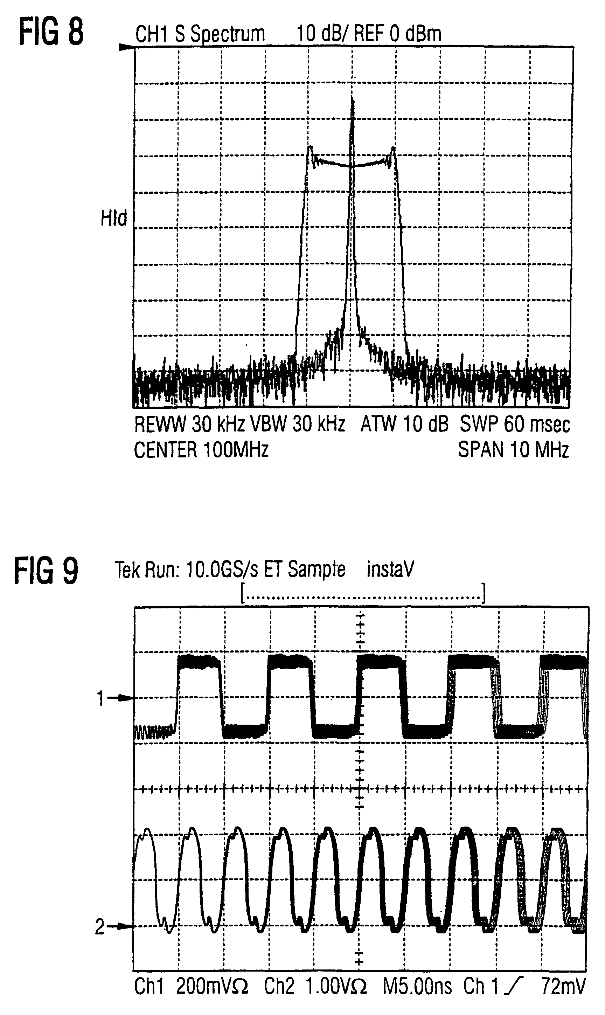

Obwohl Bandbreiten nicht sehr teuer sind, so sind es unbegrenzte Bandbreiten. So verwendet ein guter Entwurf einer Datenverbindung nicht viel mehr Bandbreite als für die Übertragung der Informationen erforderlich. Aber selbst das Auffüllen der Lücken zwischen den Spektrallinien würde eine erhebliche Verbesserung bringen. Zur Optimierung einer Datenverbindung sollte die Codierung und das Formen eines Signales derart sein, daß keine zusätzliche Bandbreite erforderlich ist und daß anstelle von einzelnen Spektrallinien ein konstantes Leistungsspektrum mit frequenzunabhängigen Leistungsdichten vorliegt. Fig. 8 zeigt ein typisches Nadelspektrum eines 1010 Signals und mit der zweiten Kurve das Spektrum desselben Signals, das für eine breitere Bandbreite mit einer 2 MHz-Frequenzmodulation (FM) abgeändert wurde. In Figur 9 sind dasselbe Signal und dessen Taktsignal in dem Zeitfenster eines Oszilloskops angezeigt. Es besteht kein signifikanter Unterschied zwischen diesen beiden Signalen.

Dies zeigt, daß die EMV-Eigenschaften einer digitalen Verbindung durch leichte Abänderung des Signals signifikant verbessert werden können. Es werden unterschiedliche Verfahren zur Spreizung des Spektrums nachstehend beschrieben.

Allgemeine Datencodierungschemata

Gewöhnlich werden Daten in Blöcken gepackt, die einen zusätzlichen Block und Fehlerüberprüfungsbits enthalten. Diese zusätzlichen Bits sind ebenfalls zur Synchronisation des Datenempfängers zu dem Sender notwendig. Häufig wird eine bestimmte Codierung wie 8B/10B zur. Ausführung dieser Aufgaben verwendet. Auf diese Weise würde ein extrem langer Datenstrom bestehend nur aus Nullen und Einsen niemals auftreten. Typische Blöcke die Synchronisations- und Fehlerkorrekturbits aufweisen, haben Größen $n_{Frame}$ von etwa 10 bis 20 Bits. Dies ergibt eine niedrigere Frequenzbegrenzung und eine Beabstandung der Spektrallinien mit der Blockwiederholungsrate, selbst falls die Daten nur Nullen oder Einsen enthalten. Mit einer Datentaktrate $f_{Data}$ ist die untere Frequenzbegrenzung $f_{Min}$ und die minimale Beabstandung der Spektrallinien gleich:

$$f_{Min} = \frac{f_{Data}}{n_{Frame}} \tag{3}.$$

Zusätzlich werden die Daten gewöhnlich codiert, um gleichstromfrei zu sein, und zur Erhöhung der Redundanz für eine einfache Fehlererfassung. Sowohl eine Datenverpackung als auch eine Codierung ermöglichen die Aufspreizung des Spektrums. Eine kleine Packungsdichte bewirkt eine relativ hohe Packungswiederholungsrate und deshalb eine mäßige Spektrumsspreizung. Beispielsweise ergibt ein 10-Bit-Block bei einer Datentaktsignalrate von 200 MHz eine spektrale Linienbeabstandung von:

$$f_{Min} = \frac{200\,MHz}{10} = 20\,MHz \tag{4}.$$

Dies bedeutet, daß in dem Spektrum nicht nur spektrale Linien bei 100 MHz, 300 MHz, 500 MHz, usw. sondern zusätzlich Linien erscheinen, die bei 20 MHz beabstandet sind. Dies ergibt fünfmal mehr Spektrallinien mit einem durchschnittlichen Absinken in der Leistung von 7 dB. Solch eine Codierung allein ist für eine wirksame EMV-Verbesserung nicht ausreichend genug.

Pseudozufallsmuster

Ein Datenstrom mit einer Zufallsfolge von Nullen und Einsen ergibt eine sehr gleichmäßige spektrale Verteilung. Theoretisch würde eine unbegrenzte Zufallsfolge ein perfektes Spreizungsspektrum mit einer konstanten spektralen Leistungsdichte bewirken. Nachteiligerweise kann ein derartiger Datenstrom die erwünschten Informationen nicht enthalten. Um dieses Problem zu lösen, können deterministische Pseudozufallsmuster verwendet werden. Diese bestehen aus einer vorbestimmten, reproduzierbaren Folge von Bits. Gewöhlicherweise ist die Länge dieser Muster festgelegt. Diese Muster werden Pseudozufallsmuster genannt, da sie auf den ersten Blick wie eine Zufallsfolge aussehen, aber sie haben eine festgelegte Folge und können vorhergesagt werden. Eine wirkliche Zufallsfolge kann niemals vorhergesagt werden.

Einfluß der Musterlänge auf die spektrale Dichte

In der Praxis verwendete Pseudozufallsmuster weisen eine begrenzte Musterlänge auf. Nach der Sendung von $n_P$ Bits wird dasselbe Muster wiederholt. Die Gründe für kurze Muster sind begrenzte Speicher für die Muster und eine einfachere Synchronisation. Ein langes Muster und deshalb eine niedrige Musterwiederholungsrate bewirken niedrige Frequenzkomponenten in dem Signal und deshalb eine nahe Spektrallinienbeabstandung. Der minimale Abstand $\Delta f$ benachbarter Spektrallinien ist umgekehrt proportional zu der Zufallsmusterlänge $n_P$:

$$\Delta f = \frac{f_D}{n_p} \tag{5}.$$

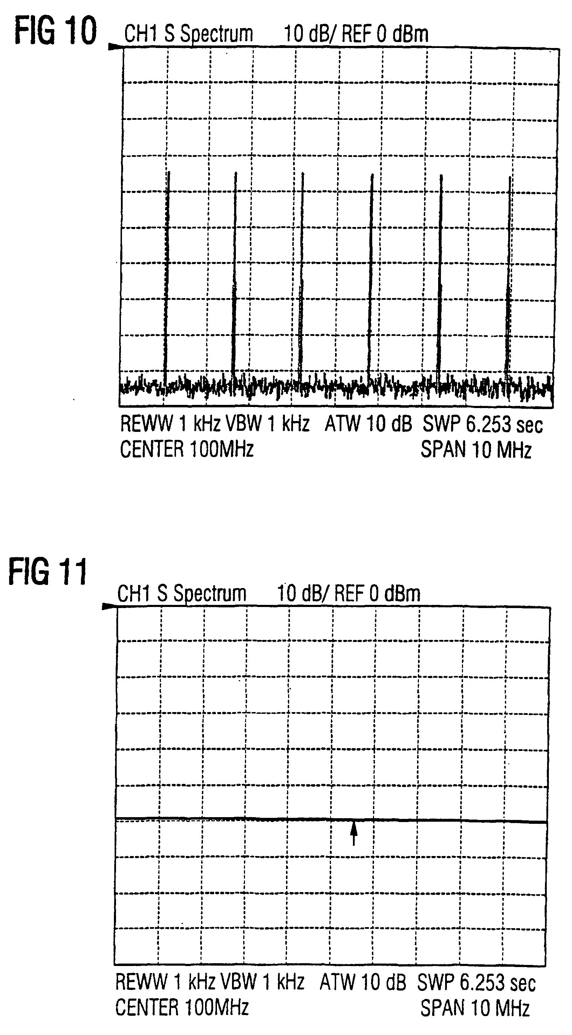

Somit ist eine große Musterlänge für eine niedrige Spektrallinienbeabstandung wünschenswert. Der Einfluß der Musterlänge ist in den Figuren 10, 11 und 12 dargestellt.

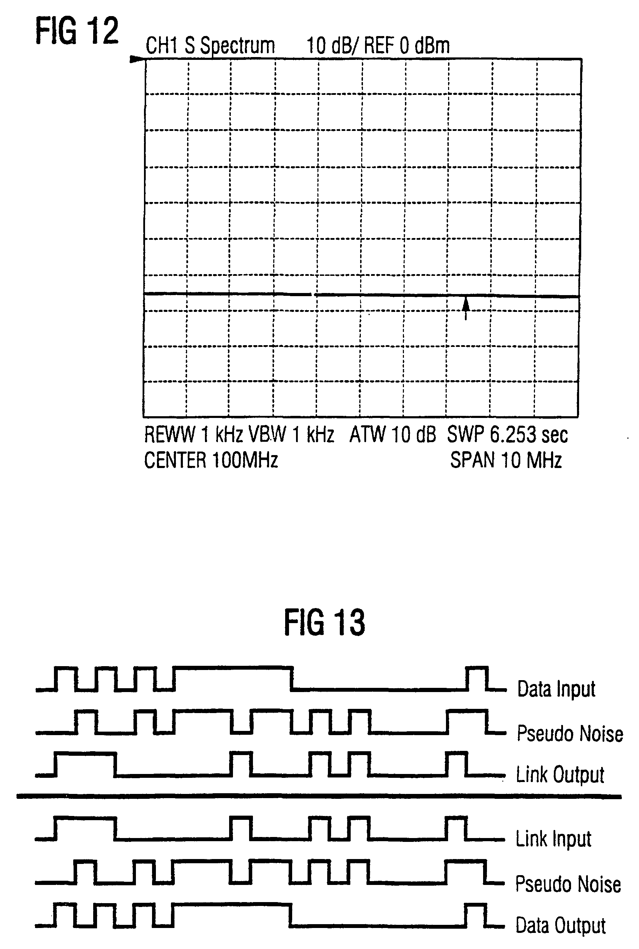

In Fig. 10 sind die Spektrallinien mit 1,56 MHz beabstandet, ihre Amplituden betragen -36dBm. Wird wie in Fig. 11 dargestellt eine längere Codefolge ausgewählt, wobei die Musterlänge um das 256fache größer ist, dann sind die Spektrallinien um 6,1 KHz beabstandet. Dies ist unterhalb der Auflösung des Spektralanalysators, der eine gerade Linie anzeigt. Die Amplitude der Spektrallinien (die zu der Amplitude der Linie identisch ist) ist mit -60 dBm exakt 1/256 der vorhergehenden Amplitude von -36 dBm. Eine vierfach größere Musterlänge wird in Fig. 12 angewendet, woraus sich eine viermal niedrigere (-6 dB) Signalamplitude ergibt.

Anwendung von Pseudozufallsmustern nach dem Stand der Technik.

Eine einfache Annäherung für sehr kurze Pseudozufallsfolgen ist ein Codierschema wie die allgemein verwendete 4 B/5 B- oder 8B/10B-Codierung. Hier werden 8 Bit Binärzahlen in eine Folge von 10 sich verändernden Bits codiert. Auf diese Weise wird sich selbst aus einer 0 nicht eine lange Folge von Null-Bits ergeben. Diese Muster ergeben einen leichten Spreizungseffekt, aber ergeben eine gleichmäßigere Spektralverteilung.

Ferner sind eine sehr übliche Verwendung von Pseudozufallsmustern Bit-Fehlerratentests, bei denen das Breitbandspektrum dieser Muster eine vollständige Überprüfung des gesamten Übertragungssystems erlauben.

Statische Muster

Die meisten seriellen Sender verwenden ein Leerzeichen, wenn keine Daten zu senden sind. Dieses Leerzeichen ist ein eindeutiges Muster, das die Identifikation als "keine Daten" ermöglicht und weiter ermöglicht, daß der Empfänger zu dem Sendertaktsignal synchronisiert wird. Gewöhnlich liegt nur eine Art von Leerzeichenmuster vor. Werden keine Daten für längere Zeitdauern gesendet, dann wird nur dieses Muster über die Verbindung gesendet. Es weist dieselbe Länge wie ein Standarddatenwort auf und hat deshalb eine vergleichsweise hohe untere Frequenz und eine Spektrallinienbeabstandung, die sich aus Gleichung (5) ergibt. Gewöhnlicherweise weisen derartige Muster keine gerade Verteilung ihrer Spektrallinien auf. Folglich kann eine Hochgeschwindigkeitsdatenverbindung ausgezeichnete EMV-Eigenschaften aufweisen, wenn reale Daten gesendet werden. Aber in dem Moment, wenn die Sendung beendet wird und ein Leerzeichen gesendet wird, sind die EMV-Eigenschaften sehr verschlechtert. Diese statische Muster sind der ungünstigste Fall für eine elektromagnetische Emission bzw. Aussendung. Falls eine Sendung dieser Muster über längere Zeitdauern nicht vermieden werden kann, sollten die EMV-Messungen unter diesen Bedingungen ausgeführt werden.

Bei der Festlegung eines guten Systems sollten derartige statische Muster unter allen Umständen vermieden werden. Dies kann durch Senden sich verändernder Abnehmerleerzeichen oder durch Senden einer Pseudozufallsfolge erfolgen, die den Leerzeichenzustand signalisieren. Selbst eine lange Folge von Nullcodes kann akzeptiert werden, falls es mit einem Pseudorauschsignal mit einer langen Musterlänge codiert wird.

### Erfindungsgemäße Verfahren zur Aufspreizung der Bandbreite

Wie es vorstehend beschrieben wurde, gibt es unterschiedliche Wege zur Aufspreizung des Spektrums. Die beste Wirkung auf die elektromagnetische Aussendung wird erhalten, wenn zumindest zwei Verfahren, die einander ergänzen, angewendet werden. Eine sehr gute Kombination ist eine Pseudorauschendatencodierung zusammen mit einer Art von Datenzeitverlaufmodulation. Der Datenzeitverlauf kann auf unterschiedliche Weisen moduliert werden. Ein Weg ist die Abänderung des ursprünglichen Datentaktsignals beim Sender. Ein weiterer Weg ist die Abänderung des Zeitverlaufs des Datenstroms selber.

### Datencodierung

Wie es vorstehend dargestellt wurde, sollte zur Optimierung der EMV-Eigenschaften der Datenstrom wie eine Zufallsfolge aussehen. Sehr oft weisen reale Daten Zufallseigenschaften auf. In Meßsignalen oder Videobildsignalen tritt immer ein gewisses Rauschen auf, welches die Zufallseigenschaften mit einbringt. In weiteren Fällen würde die Codierung des Datenstroms mit einer Zufallsfolge ein gewünschtes Ergebnis bringen. Diese Codierung kann sehr leicht ausgeführt werden. Falls Daten in großen Blöcken gesendet werden, kann jeder Block mit einer gegebenen Zufallsfolge einer Exklusiv- ODER -Verknüpfung unterzogen werden (Fig. 13). Nun sieht das gesendete Signal wie ein Zufallssignal aus. Selbst in dem schlechtesten Fall einer Folge von Nullen oder Einsen sieht das Signal wie ein Zufallssignal aus.

Der Empfänger kann die ursprünglichen Daten durch die Exklusiv-ODER-Verknüpfung des Blocks mit derselben Zufallsfolge als den ursprünglichen Datenblock rekonstruieren. Als Alternative kann das Signal einem klassischen Pseudozufallsgenerator zugeführt werden, der auf Schieberegister mit Rückführung beruhen kann.

Es gibt bestimmte Situationen, auf die ein Augenmerk gerichtet werden sollte. Die meisten Datenparallel-Serienumsetzer weisen ein festgelegtes "keine Daten"-Signal auf, was diesen ermöglicht in dem Fall eines Fehlens von Daten zu synchronisieren. Falls der Parallel-Serienumsetzer keine Daten zugeführt bekommt, wird er kontinuierlich dieses kurze Datenwort senden, das gewöhnlicherweise aus einer Folge von 10 bis 20 Bits besteht. Dieses Signal führt zu einer sehr breiten Frequenzlinienbeabstandung und deshalb zu sehr schlechten EMV-Eigenschaften. Somit muß unter allen Umständen vermieden werden, daß ein statisches Muster zu senden ist. Um dies zu verhindern, müssen dem Parallel-Serienumsetzer Daten zugeführt werden. Dies kann durch eine einfache Softwareveränderung erfolgen. Anstelle daß keine Daten gesendet werden, können dieselben Blöcke gesendet werden, die für Daten verwendet werden, aber diese sind mit Nullen oder einigen anderen Mustern aufgefüllt, die als "keine Daten" identifiziert werden können. Wird der Strom von Nullen mit dem Zufallsmuster exklusiv-ODER-verknüpft. so ergibt dieses ein perfektes Zufallsmuster in der Datenverbindung und deshalb beste EMV-Eigenschaften. Beim Empfänger kann der Strom von Nullen nach der Exklusiv-ODER-Verknüpfung mit dem Zufallsmuster leicht als keine Daten identifiziert werden.

Wie es vorstehend dargestellt wurde, ist der Spektrallinienabstand umgekehrt proportional zu der Pseudozufallsmusterlänge. Der minimale Spektrallinienabstand kann durch die Gleichung (3) berechnet werden. Zur Ergänzung der Datencodierung sollte eine Zeitverlaufmodulationstechnik angewendet werden. Wenn keine sehr langen Codefolgen verwendet werden, kann eine Datencodierung am besten eine grobe Spreizung bewirken, wohingegen eine Zeitverlaufmodulation am besten eine feine Spreizung bewirken kann.

### Aufspreizen des Datentaktsignals

Im Einleitungsteil wurden die Frequenzmodulation und die Phasenmodulation beschrieben.

Um eine Verbesserung für untere Datenraten bei der Frequenzmodulation zu bewirken, muß der Takt für mehr als die erlaubten $10^{-4}$ verschoben werden. Dies kann durch synchrones Verschieben des Sender- und Empfängertakts erfolgen. Um dies auszuführen, muß eine Niederfrequenznachrichtenübermittlung zwischen Sender und Empfänger vorliegen. Solche Informationen können über eine zusätzliche Niederfrequenzleitung oder in dem Fall von Drehverbindem durch einen herkömmlichen Schleifringweg gesendet werden. Hier sind Rauschen und Bandbreite nicht kritisch. Ein anderer Weg ist die Verwendung einiger schon gemeinsam verfügbarer Signale wie bei einer Wechselstrom-(AC-) Energieleitung zur Synchronmodulation von Sender- und Empfängertakt. Somit ist kein zusätzliches Signal notwendig.

Bessere Ergebnisse können durch Modulation des Taktsignals mit einer sehr hohen zeitproportionalen Frequenz erreicht werden. Die Modulation sollte sehr schnell sein, so daß der Empfänger-PLL den Frequenzveränderungen nicht folgen kann. Falls die Gesamtphasenverschiebung zu groß ist, kann der Empfänger Daten verlieren. In diesem Fall kann ein ähnliches Verfahren, wie es im Einleitungsteil unter Phaseschiebeverfahren beschrieben wurde, angewendet werden. Im allgemeinen sollte diese Lösung an die Verbindung und deren tatsächliche Datentaktsrate angepaßt sein.

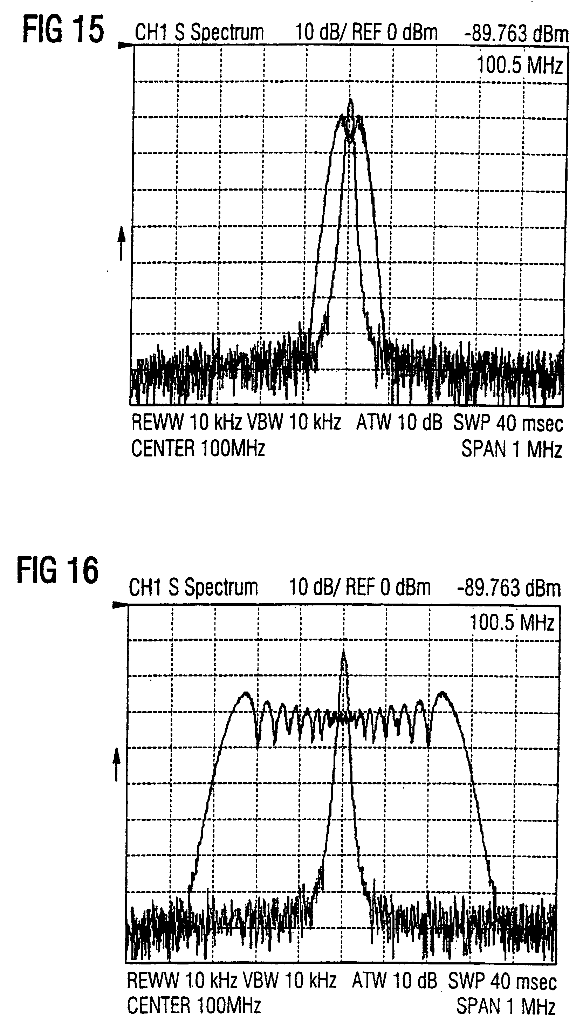

Im Einleitungsteil wurden die Modulation des Datenstroms und das Phasenschiebeverfahren dargestellt. Fig. 14 zeigt ein Blockschaltbild der Schaltung des Phasenschiebeverfahrens.

Fig. 15 zeigt ein phasenmoduliertes Signal mit einer 6,28 rad-Modulation bei 10 KHz. Diese Phasenverschiebung von 6,28 rad entspricht eine volle Periode.

Fig. 16 zeigt eine Art der Frequenzmodulation mit einer Frequenzmodulation bei 1 MHz. Frequenzmodulation ist ein Spezialfall einer Phasenmodulation mit über die Zeit integrierten Phasenwinkeln.

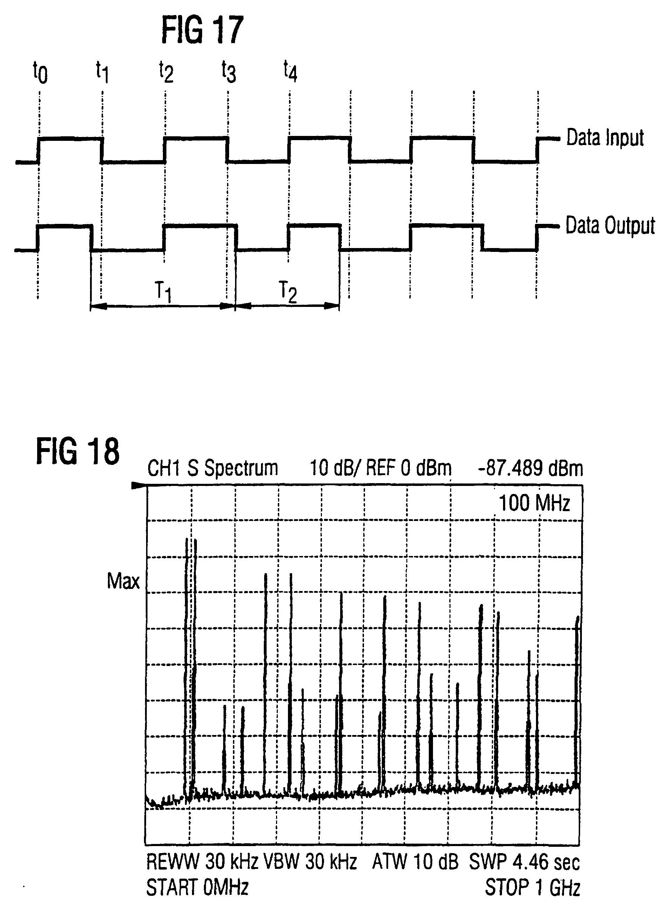

Ein einfaches Beispiel eines derartigen frequenzmodulierten Signals ist in Fig. 17 dargestellt.

Das Eingangssignal weist eine konstante Taktrate auf. Dies bedeutet, daß alle Zeitintervalle $t_n - t_{n-1}$ dieselbe Breite aufweisen. Bei einer gesteuerten Verzögerungsschaltung weisen die Taktsignalveränderungen zu Zeitpunkten $t_0$, $t_2$, $t_4$, $t_6$, $t_8$ keine Verzögerung auf, wohingegen die Veränderungen bei Zeitpunkten $t_3$, $t_7$ eine kleine positive Verzögerung $\Delta t$ aufweisen und die Veränderungen bei Zeitpunkten $t_1$, $t_5$ weisen eine kleine negative Verzögerung $-\Delta t$ auf. Folglich ist der erste Taktsignalzyklus $T_1$ länger als der zweite Taktsignalzyklus $T_2$. Somit kann $T_1$ durch folgende Formel ausgedrückt werden:

$$T_1 = T_2 + 2 \times \Delta t \qquad (7).$$

Deshalb sind die Basisfrequenzen beider Taktsignalzyklen gleich:

$$f_1 = \frac{1}{T_1} = \frac{1}{T_2 + 2 \cdot \Delta t} \qquad (8)$$

$$f_2 = \frac{1}{T_2} \qquad (9).$$

Nun wurde die Anzahl der Spektrallinien verdoppelt (Fig. 18).

Zur weiteren Erhöhung der Anzahl von Spektrallinien können zusätzliche Frequenzen $f_1$ und $f_2$ eingeführt werden. Um dies zu erreichen, muß nur die Verzögerung $\Delta t$ gemäß den Gleichungen (8) und (9) abgeändert werden.

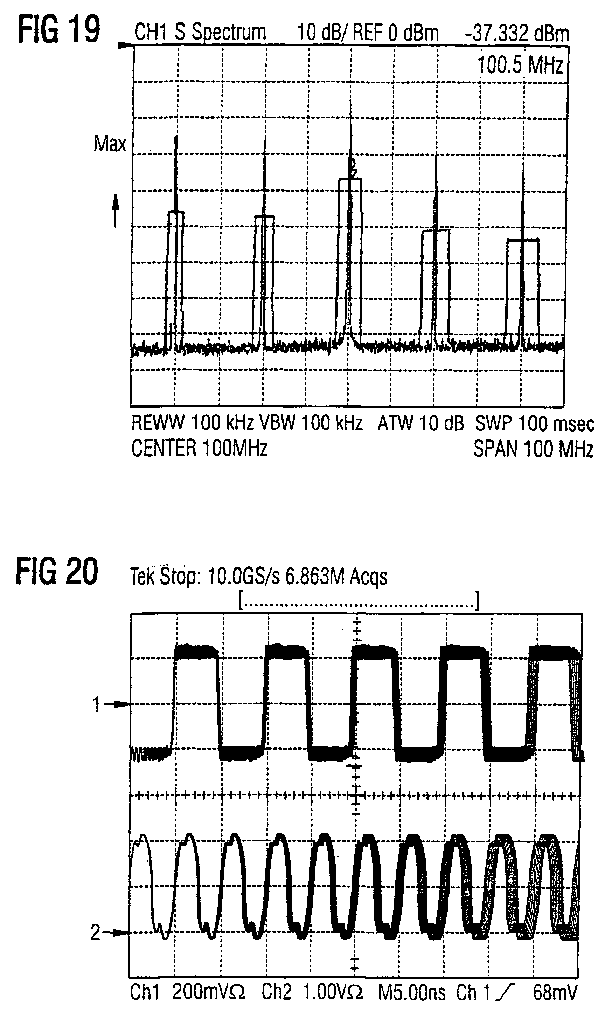

Zu diesem Zweck wird die Verzögerungsteuereinrichtung durch einen zusätzlichen Modulationsgenerator gesteuert, der die Verzögerungssteuereinrichtung dazu zwingt, alle Verzögerungen zwischen $\Delta t_{Min}$ und $\Delta t_{Max}$ mit einer sehr niedrigen Frequenz zu durchlaufen. Somit werden die spektralen Lücken zwischen $f_1$ und $f_2$ aufgefüllt, wie es in Fig. 19 dargestellt ist.

Infolge der sehr kleinen zusätzlichen Verzögerungen verhält sich das Signal wie ein Signal mit zusätzlichen niedrigen Synchronisationsstörungen (Jitter) (Fig. 20). Dieses zusätzliche Jitter weist zwei spektrale Komponenten auf, die zu berücksichtigen sind. Zuerst verhält sich die Hochfrequenzmodulation wie wirkliches Jitter. Es beeinflußt die Verbindungseigenschaften. Aber für kontaktlose Drehverbinder, die ein Jittern von 5% aufweisen, ist ein zusätzliches Modulationsjittern von 5 % akzeptabel. Die meisten Digitalverbindungsempfänger akzeptieren ein Jittern von 20 % ohne Beeinträchtigung. Zweitens wird die Niederfrequenzkomponente des Modulationsgenerators so ausgewählt, daß eine Dauer etwas kürzer als die Dauer der Integration der EMV-Messung ist. Für Messungen gemäß CISPR 11 ist die Dauer 10 ms. Somit sollte die Modulationsfrequenz oberhalb 100 Hz liegen. Diese niedrige Frequenz wird durch alle Empfänger-PLLs beseitigt.

Taktregenerierungsverfahren

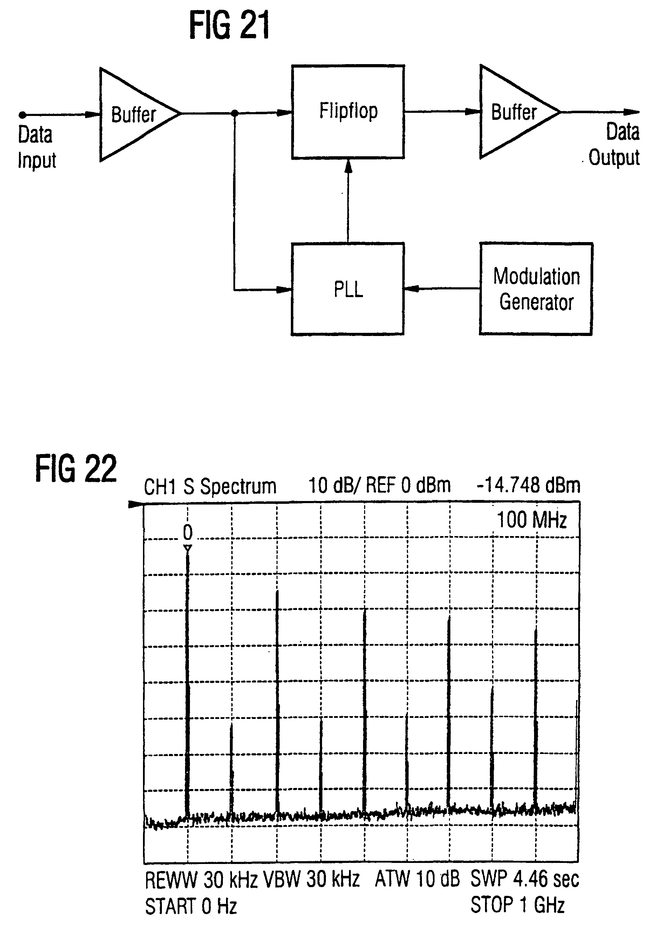

Ein weiterer Weg zur Änderung der spektralen Eigenschaften des Datenstroms ist die Verwendung einer vollständigen Synchronisations-(retimimg-) Schaltung. Fig. 21 zeigt die grundsätzliche Arbeitsweise. Der Datenstrom wird einer PLL-Schaltung zur Wiedergewinnung bzw. Regenerierung des Datentakts zugeführt. Dieses regenerierte Taktsignal wird einer Synchronisations-(retiming-) Schaltung für den Datenstrom zugeführt. Eine zusätzliche Modulationserzeugungseinrichtung ändert die PLL-Frequenz zur Modulation des Datenstroms ab.

Diese Schaltung verhält sich ähnlich wie die vorstehend beschriebene Schaltung, aber sie führt zusätzlich eine Synchronisation (retiming) und deshalb eine Verringerung des Jitterns in dem Datenstrom aus. Es bestehen zwei Möglichkeiten zur Steuerung des PLLs. Die erste Möglichkeit ist das Digital-PLL-Ausgangssignal zu ändern und zusätzliche Verzögerungen einzubringen. Eine weitere Möglichkeit ist die Steuerung des VCO durch ein analoges Signal. Um dies auszuführen, könnte der VCO zuerst einen kleinen negativen Impuls zugeführt bekommen, der zu dessen Steuerspannung zugeführt wird, und nach einer oder mehreren Dauern wird diesem ein kleiner negativer Impuls zugeführt, der dieselbe Amplitude aufweist. Daraus ergibt sich eine schnelle Kurzzeitfrequenzveränderung, die selbst so schnell ist, daß der PLL selbst nicht darauf reagieren kann.

Wie bei der Taktmodulation geht in den Datenstrom zusätzliches Jittern ein.

Messungen an abgeänderten Digitalsignalen

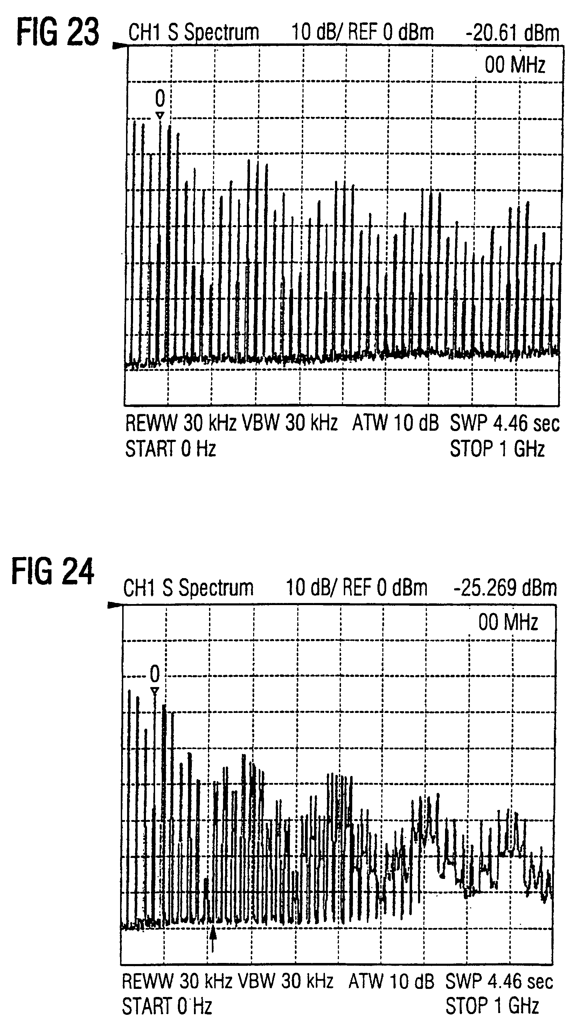

Einige abschließende Messungen zeigen den Nutzen eines PCM-Signals mit gespreiztem Spektrum. In Fig. 22 ist der ungünstigste Fall eines 1010-PCM-Signals bei 200 Mbaud gezeigt. Hier ist der Spitzenwert der Amplitude bei 100 MHz gleich -14,7 dBm. Wird ein echtes 8B/10B-codiertes Signal verwendet, so sieht das Spektrum wie in Fig. 23 dargestellt aus. In diesem Beispiel ist nun die maximale Amplitude gleich -20,6 dBm und der Mindestabstand der Spektrallinien ist 20 MHz. Infolge der Kurzlängencodierung ist dieses Spektrum nicht gleichmäßig gespreizt. Es weist keine konstante Leistungsdichte auf, was wünschenswert wäre, aber dafür einige Spitzenwerte mit Nullen dazwischen. Aber selbst dieses führt zu einer Verbesserung von etwa 6dB über dem ungünstigen Fall eines 1010-Signals.

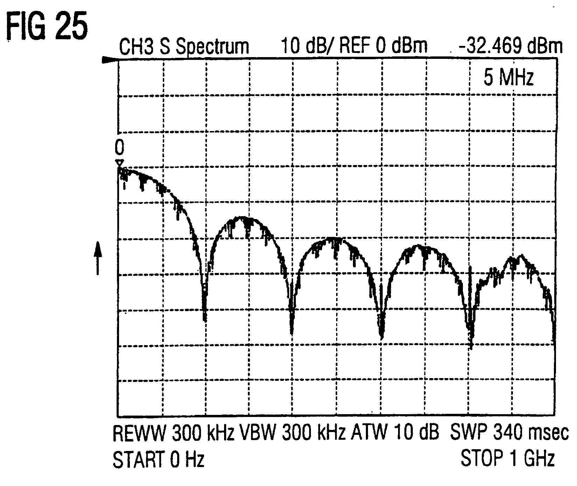

Wird eine Frequenzmodulation an dem 8B/10B-Signal angewendet, so ergibt sich das Spektrum gemäß Fig. 24. Nun ist die maximale Amplitude gleich -25,3 dBm mit einer erneuten Verbesserung von 5dB. Hier füllt die Frequenzmodulation nur die Lücken zwischen den 8B/10B-Signalspektrallinien auf, aber sie kann das Spektrum nicht glätten. Eine Codierung mit einer Langpseudorauschfolge mit einer Musterlänge von 128 Bits ergibt ein sehr gleichmäßiges Spektrum mit einer maximalen Amplitude von -32,5 dBm, wie es in Fig. 25 dargestellt ist. Die gemessenen Werte bestätigen die theoretischen Betrachtungen. Einige Abweichungen sind durch Beschränkungen und Vereinfachungen des theoretischen Modells verursacht.

**Patentansprüche**

**1.** Anordnung zur störarmen Signalübertragung eines Signals und insbesondere eines digitalen Signals von einem Sender (1) zu einem räumlich getrennten Empfänger (3), die vorzugsweise gegeneinander beweglich sind, über eine leitungsgebundene, eine kontaktierende und/oder eine kontaktlose Übertragungsstrecke (2). insbesondere bei Drehübertragern,
**dadurch gekennzeichnet, dass** eine Modulationseinheit (4) das zu übertragende Signal, das Trägersignal des Senders im Sender (1) oder das Senderausgangssignal an einer beliebigen Stelle der Übertragungsstrecke (2) unabhängig von der zum Zwecke der Signalübertragung gewählten Modulation moduliert, so dass einzelne spektrale Anteile das Ausgangssignalspektrum des Senders (1) verbreitert und damit die spektrale Leistungsdichte des Senderausgangssignal reduziert wird, ohne die Bandbreite des Signals wesentlich zu erhöhen.

**2.** Anordnung nach Anspruch 1,
**dadurch gekennzeichnet, dass** das zu übertragende Signal, das Trägersignal des Senders im Sender oder das Senderausgangssignal an einer beliebigen Stelle der Übertragungsstrecke unabhängig vom Übertragungstakt derart moduliert wird, dass das Linienspektrum des Senderausgangssignals verbreitert wird, so dass durch Auffüllen der Lücken zwischen den einzelnen Signallinien die mittlere spektrale Leistungsdichte reduziert wird.

**3.** Anordnung nach Anspruch 1 oder 2,
**dadurch gekennzeichnet, dass** eine Steuereinheit (5) die Modulationseinheit (4) steuert.

**4.** Anordnung nach einem der Ansprüche 1 bis 3,
**dadurch gekennzeichnet, dass** der Sender (1) einen Taktgenerator aufweist.

**5.** Anordnung nach Anspruch 4,
**dadurch gekennzeichnet, dass** die Modulationseinheit (4) den Taktgenerator zur Verbreiterung des Linienspektrums entsprechend ansteuert.

6. Anordnung nach Anspruch 5,
   **dadurch gekennzeichnet, dass** die Modulationseinheit (4) die Taktfrequenz des Taktgenerators frequenzmoduliert.

7. Anordnung nach Anspruch 6,
   **dadurch gekennzeichnet, dass** der Taktgenerator als frequenzbestimmendes Element einen VCO aufweist.

8. Anordnung nach Anspruch 7,
   **dadurch gekennzeichnet, dass** die Steuereinheit (5) den VCO einstellt.

9. Anordnung nach einem der Ansprüche 1 bis 8,
   **dadurch gekennzeichnet, dass** die Modulationseinheit (4) das zu übertragende Signal, welches insbesondere ein digitales Signal ist, frequenz-, phasen- oder amplitudenmoduliert.

10. Anordnung nach einem der Ansprüche 1 bis 9,
    **dadurch gekennzeichnet, dass** die Modulationseinheit (4) das Trägersignal des Senders im Sender (1) oder das Senderausgangssignal an einer beliebigen Stelle auf der Übertragungsstrecke (2) unabhängig von der zum Zwekke der Signalübertragung gewählten Modulation frequenzbzw. phasenmoduliert.

11. Anordnung nach einem der Ansprüche 1 bis 10,
    **dadurch gekennzeichnet, dass** eine Modulationseinheit (4) im Falle eines pulsförmigen Trägersignals des Senders (1) oder eines pulsförmigen Senderausgangssignals, einzelne Signalflanken proportional dem von einem zusätzlich vorhandenen Modulationssignalgenerator vorgegebenen Signal zu früheren oder späteren Zeitpunkten hin verschiebt bzw. verzögert.

12. Anordnung nach Anspruch 11,
    **dadurch gekennzeichnet, dass** die Modulationseinheit (4) eine Verzögerungssteuereinrichtung zur Analyse des Senderausgangssignals und zur Steuerung einer Verzögerungsschaltung ausweist, welche die Verschiebung bzw. Verzögerung bewirkt.

13. Anordnung nach Anspruch 12,
    **dadurch gekennzeichnet, dass** die Verzögerungssteuereinrichtung eine PLL-Einrichtung und die Verzögerungsschaltung eine Flip-Flop-Schaltung aufweisen.

14. Anordnung nach einem der Ansprüche 1 bis 13,
    **dadurch gekennzeichnet, dass** der Sender (1) eine PLL-Einrichtung aufweist.

15. Anordnung nach Anspruch 14,
    **dadurch gekennzeichnet, dass** der Modulationshub der Modulationseinheit (4) im Regelbereich der PLL-Einrichtung des Senders (1) liegt.

16. Anordnung nach einem der Ansprüche 1 bis 15,
    **dadurch gekennzeichnet, dass** zusätzlich zu der Modulierung durch die Modulationseinheit (4) eine Datenkodierung mittels Pseudozufallsrauschen vorgenommen wird.

17. Anordnung nach einem der Ansprüche 1 bis 16,
    **dadurch gekennzeichnet, dass** im Empfänger (3) eine Steuereinheit (5) vorhanden ist, welche den Empfänger (3) synchron zur Modulation durch die Modulationseinheit (4) im Sender (1) oder an einer beliebigen Stelle der Übertragungsstrecke (2) steuert, so dass das Empfangssignal im Empfänger (3) zumindest ohne diese zusätzliche Modulation weiterverarbeitet werden kann, wobei die Synchronisation zwischen Sender (1) bzw. Übertragungsstrecke (2) und Empfänger (3) wahlweise über das Modulationssignal oder auch über ein weiteres, für Sender (1) bzw. Übertragungsstrecke (2) und Empfänger (3) gemeinsam verfügbares Signal erfolgen kann.

18. Anordnung nach einem der Ansprüche 1 bis 17,
    **dadurch gekennzeichnet, dass** ein zusätzlicher Übertragungsweg zwischen Sender (1) bzw. Übertragungsstrekke (2) und Empfänger (3) vorhanden ist, auf dem ein zusätzliches Synchronisationssignal zur Steuerung der Modulation von Sender (1) bzw. Übertragungsstrecke (2) und Empfänger (3) übertragen wird.

19. Verfahren zur störarmen Signalübertragung eines Signals und insbesondere eines digitalen Signals von einem Sender (1) zu einem räumlich getrennten Empfänger (3), die vorzugsweise gegeneinander beweglich sind, über eine leitungsgebundene, eine kontaktierende und/oder eine kontaktlose Übertragungsstrecke (2), insbesondere bei Drehübertragern,
**gekennzeichnet durch** eine von einer Modulationseinheit (4) ausgeführte Modulation des zu übertragenden Signals, des Trägersignals des Senders im Sender (1) oder des Senderausgangssignals an einer beliebigen Stelle der Übertragungsstrecke (2) unabhängig von der zum Zwecke der Signalübertragung gewählten Modulation, zur Verbreiterung des Ausgangssignalspektrum des Senders (1) **durch** einzelne spektrale Anteile und damit zur Reduzierung der spektralen Leistungsdichte des Senderausgangssignales, ohne dabei die Bandbreite des Signals wesentlich zu erhöhen.

20. Verfahren nach Anspruch 19,
**dadurch gekennzeichnet, dass** die Reduzierung der mittleren spektralen Leistungsdichte durch Auffüllen der Lücken zwischen den einzelnen Signallinien erfolgt.

21. Verfahren nach einem der Ansprüche 19 oder 20, **gekennzeichnet durch** Steuern der Modulationseinheit (4) **durch** eine Steuereinheit (5).

22. Verfahren nach einem der Ansprüche 19 bis 21,
**dadurch gekennzeichnet, dass** der Sender (1) einen Taktgenerator aufweist.

23. Verfahren nach Anspruch 22,
**gekennzeichnet durch** entsprechendes Ansteuern des Taktgenerators **durch** die Modulationseinheit (4) zur Verbreiterung des Linienspektrums.

24. Verfahren nach Anspruch 23,
**gekennzeichnet durch** Frequenzmodulation der Taktfrequenz des Taktgenerators **durch** die Modulationseinheit (4).

25. Verfahren nach Anspruch 24
**dadurch gekennzeichnet, dass** der Taktgenerator als frequenzbestimmendes Element einen VCO aufweist.

26. Verfahren nach Anspruch 25,
**gekennzeichnet durch** Einstellen des VCO **durch** die Steuereinheit (5).

27. Verfahren nach einem der Ansprüche 19 bis 26,
**dadurch gekennzeichnet, dass** die Modulationseinheit (4) das zu übertragende Signal, welches insbesondere ein digitales Signal ist, frequenz-, phasen- oder amplitudenmoduliert.

28. Verfahren nach einem der Ansprüche 19 bis 27,
**dadurch gekennzeichnet, dass** die Modulationseinheit (4) das Trägersignal des Senders im Sender (1) oder das Senderausgangssignal an einer beliebigen Stelle auf der Übertragungsstrecke (2) unabhängig von der zum Zwecke der Signalübertragung gewählten Modulation frequenz-bzw. phasenmoduliert.

29. Verfahren nach einem der Ansprüche 19 bis 28,
**dadurch gekennzeichnet, dass** eine Modulationseinheit (4) im Falle eines pulsförmigen Trägersignals des Senders (1) oder eines pulsförmigen Senderausgangssignals, einzelne Signalflanken proportional dem von einem zusätzlich vorhandenen Modulationssignalgenerator vorgegebenen Signal zu früheren oder späteren Zeitpunkten hin verschiebt bzw. verzögert.

30. Verfahren nach Anspruch 29,
**dadurch gekennzeichnet, dass** die Modulationseinheit (4) eine Verzögerungssteuereinrichtung zur Analyse des Senderausgangssignals und zur Steuerung einer Verzögerungsschaltung ausweist, welche die Verschiebung bzw. Verzögerung bewirkt.

31. Verfahren nach Anspruch 30,

**dadurch gekennzeichnet, dass** die Verzögerungssteuereinrichtung eine PLL-Einrichtung und die Verzögerungsschaltung eine Flip-Flop-Schaltung aufweisen.

32. Verfahren nach einem der Ansprüche 19 bis 31,
**dadurch gekennzeichnet, dass** der Sender (1) eine PLL-Einrichtung aufweist.

33. Verfahren nach Anspruch 32,
**dadurch gekennzeichnet, dass** der Modutationshub der Modulationseinheit im Regelbereich der PLL-Einrichtung des Senders (1) liegt.

34. Verfahren nach einem der Ansprüche 19 bis 33,
**dadurch gekennzeichnet, dass** zusätzlich zu der Modulierung durch die Modulationseinheit (4) eine Datenkodierung mittels Pseudozufallsrauschen vorgenommen wird.

35. Verfahren nach einem der Ansprüche 19 bis 34,
**dadurch gekennzeichnet, dass** im Empfänger (3) eine Steuereinheit (5) vorhanden ist, welche den Empfänger (3) synchron zur Modulation durch die Modulationseinheit (4) im Sender (1) oder an einer beliebigen Stelle der Übertragungsstrecke (2) steuert, so dass das Empfangssignal im Empfänger (3) zumindest ohne diese zusätzliche Modulation weiterverarbeitet werden kann, wobei die Synchronisation zwischen Sender (1) bzw. Übertragungsstrecke (2) und Empfänger (3) wahlweise über das Modulationssignal oder auch über ein weiteres, für Sender (1) bzw. Übertragungsstrecke (2) und Empfänger (3) gemeinsam verfügbares Signal erfolgen kann.

36. Verfahren nach einem der Ansprüche 18 bis 33,
**dadurch gekennzeichnet, dass** ein zusätzlicher Übertragungsweg zwischen Sender (1) bzw. Übertragungsstrek-ke (2) und Empfänger (3) vorhanden ist, auf dem ein zusätzliches Synchronisationssignal zur Steuerung der Modulation von Sender (1) bzw. Übertragungsstrecke (2) und Empfänger (3) übertragen wird.

**Claims**

1. Arrangement for low-interference signal transmission of a signal and particularly a digital signal from a transmitter (1) to a spatially separated receiver (3), which are preferably mobile relative to each other, via a line-bound, a contacting and/or non-contacting transmission path (2), especially with rotary transformers,
**characterised in that** a modulator unit (4) modulates the signal to be transmitted, the carrier signal of the transmitter in the transmitter (1) or the transmitter output signal at any point whatsoever of the transmission path (2) independently of the modulation type selected for signal transmission, such that individual spectral fractions in the output signal spectrum of the transmitter (1) will be widened and hence the spectral power density of the transmitter output signal will be reduced without a substantial increase of the bandwidth of the signal.

2. Arrangement according to Claim 1,
**characterised in that** the signal to be transmitted, the carrier signal of the transmitter in the transmitter or the transmitter output signal at any point whatsoever of the transmission path is modulated independently of the transmission clock cycle in such a way that the line spectrum of the transmitter output signal will be so widened that the mean spectral power density will be reduced by filling the gaps between the individual signal lines.

3. Arrangement according to Claim 1 or 2,
**characterised in that** a controller unit (5) controls the modulator unit (4).

4. Arrangement according to any of the Claims 1 to 3,
**characterised in that** said transmitter (1) comprises a clock generator.

5. Arrangement according to Claim 4,
**characterised in that** said modulator unit (4) controls said clock generator in an appropriate manner for widening the line spectrum.

6. Arrangement according to Claim 5,
**characterised in that** said modulator unit (4) subjects the clock frequency of said clock generator to frequency modulation.

**7.** Arrangement according to Claim 6,
**characterised in that** said clock generator comprises a VCO as frequency determining element.

**8.** Arrangement according to Claim 7,
**characterised in that** said controller unit (5) adjusts the VCO.

**9.** Arrangement according to any of the Claims 1 to 8,
**characterised in that** said modulator unit (4) subjects the signal to be transmitted, which is a digital signal in particular, to frequency, phase or amplitude modulation.

**10.** Arrangement according to any of the Claims 1 to 9,
**characterised in that** said modulator unit (4) subjects the carrier signal of the transmitter in said transmitter (1) or the transmitter output signal at any point whatsoever on the transmission path (2) to frequency or phase modulation, independently of the modulation technique selected for the purpose of signal transmission.

**11.** Arrangement according to any of the Claims 1 to 9,
**characterised in that** in the case of a pulse-shaped carrier signal of said transmitter (1) or a pulse-shaped transmitter output signal, a modulator unit (4) shifts or delays individual signal, edges towards earlier or later points of time in proportion to the signal predetermined by an additionally disposed modulation signal generator.

**12.** Arrangement according to Claim 11,
**characterised in that** said modulator unit (4) comprises a delay control means for analysing the transmitter output signal and for control of a delay circuit, which creates said shift or delay, respectively.

**13.** Arrangement according to Claim 12,
**characterised in that** said delay control means comprises a PLL means and that said delay circuit comprises a flip-flop circuit.

**14.** Arrangement according to any of the Claims 1 to 13,
**characterised in that** said transmitter (1) comprises a PLL means.

**15.** Arrangement according to Claim 14,
**characterised in that** the modulation amplitude of said modulator unit (4) is within the control range of the PLL means of said transmitter (1).

**16.** Arrangement according to any of the Claims 1 to 15,
**characterised in that** data coding is performed by means of pseudo random noise in addition to the modulation by said modulator unit (4).

**17.** Arrangement according to any of the Claims 1 to 16,
**characterised in that** a controller unit (5) is provided in said receiver (3), which controls said receiver (3) in synchrony with the modulation by said modulator unit (4) in said transmitter (1) or at any point whatsoever of the transmission path (2) so that the processing of the signal received in said receiver (3) can be continued at least without this additional modulation, with the synchronisation between the transmitter (1) or the transmission path (2), respectively, and the receiver (3) can be optionally implemented via the modulation signal or even via a further signal jointly available for said transmitter (1) or said transmission path (2), respectively, and said receiver (3).

**18.** Arrangement according to any of the Claims 1 to 17,
**characterised in that** an additional transmission path is provided between said transmitter (1) or transmission path (2), respectively, and said receiver (3), along which an additional synchronisation signal is transmitted for controlling the modulation of the transmitter (1) or transmission path (2), respectively, and of said receiver (3).

**19.** Method of low-interference signal transmission of a signal and particularly a digital signal from a transmitter (1) to a spatially separated receiver (3), which are preferably mobile relative to each other, via a line-bound, a contacting and/or non-contacting transmission path (2), especially with rotary transformers,
**characterised by** a modulation of the signal to be transmitted, the carrier signal of the transmitter in said transmitter (1) or the transmitter output signal, which is performed by a modulator unit (4) at any point whatsoever on the transmission path (2) independently of the modulation technique selected for the purpose of signal transmission, for widening the output signal spectrum of said transmitter (1) by individual spectral fractions and hence for a reduction of the spectral power density of the transmitter output signal, without increasing the bandwidth of the signal substantially.

20. Method according to Claim 19,
   **characterised in that** said reduction of the mean spectral power density is achieved by filling the gaps between the individual signal lines.

21. Method according to any of the Claims 19 or 20,
   **characterised by** control of said modulator unit (4) by means of a controller unit (5).

22. Method according to any of the Claims 19 to 21,
   **characterised in that** said transmitter (1) comprises a clock generator.

23. Method according to Claim 22,
   **characterised by** appropriate control of said clock generator by said modulator by appropriate control of said clock generator by said modulator unit (4) for widening the line spectrum.

24. Method according to Claim 23,
   **characterised by** frequency modulation of the clock frequency of said clock generator by said modulator unit (4).

25. Method according to Claim 24,
   **characterised in that** said clock generator comprises a VCO as frequency-determining element.

26. Method according to Claim 25,
   **characterised by** adjustment of said VCO by said controller unit (5).

27. Method according to any of the Claims 19 to 26,
   **characterised in that** said modulator unit (4) subjects the signal to be transmitted, which is a digital signal in particular, to frequency, phase or amplitude modulation.

28. Method according to any of the Claims 19 to 27,
   **characterised in that** said modulator unit (4) subjects the carrier signal of the transmitter in said transmitter (1) or the transmitter output signal at any point whatsoever on the transmission path (2) to frequency or phase modulation, respectively, independently of the modulation technique selected for the purpose of signal transmission.

29. Method according to any of the Claims 19 to 28,
   **characterised in that** in the case of a pulse-shaped carrier signal of said transmitter (1) or a pulse-shaped transmitter output signal, a modulator unit (4) shifts or delays individual signal edges towards earlier or later points of time in proportion to the signal predetermined by an additionally provided modulation signal generator.

30. Method according to Claim 29,
   **characterised in that** said modulator unit (4) comprises a delay control means for analysis of the transmitter output signal and for control of a delay circuit, which effects the shift or delay, respectively.

31. Method according to Claim 30,
   **characterised in that** said delay control means comprises a PLL means and said delay circuit comprises a flip-flop circuit.

32. Method according to any of the Claims 19 to 31,
   **characterised in that** said transmitter (1) comprises a PLL means.

33. Method according to Claim 32,
   **characterised in that** the modulation amplitude of said modulator unit is within the control range of the PLL means of said transmitter (1).

34. Method according to any of the Claims 19 to 33,
   **characterised in that** data coding by means of pseudo random noise is performed in addition to the modulation by said modulator unit (4).

35. Method according to any of the Claims 19 to 34,
**characterised in that** in said receiver (3) a controller unit (5) is provided that controls the receiver (3) in synchrony with the modulation by said modulator unit (4) in said transmitter (1) or at any point whatsoever of said transmission path (2) such that the processing of the signal received in said receiver (3) can be continued at least without this additional modulation, with the synchronisation between said transmitter (1) or transmission path (2), respectively, and said receiver (3) can be optionally implemented via the modulation signal or even via a further signal jointly available for said transmitter (1) or said transmission path (2), respectively, and said receiver (3).

36. Method according to any of the Claims 18 to 33,
**characterised in that** an additional transmission path is provided between said transmitter (1) or transmission path (2), respectively, and said receiver (3), along which an additional synchronisation signal is transmitted for controlling the modulation of said transmitter (1) or transmission path (2), respectively, and of said receiver (3).

**Revendications**

1. Arrangement pour une transmission de signal à un faible niveau de brouillage d'un signal, et en particulier d'un signal numérique, d'un émetteur (1) à un récepteur (3) en séparé en espace, qui sont, de préférence, mobiles l'un relativement à l'autre, via une voie de transmission (2) line-bound, à contact et/ou sans contact, notamment dans des transformateurs rotatifs,
**caractérisé en ce qu'**une unité modulatrice (4) module le signal à transmettre, le signal porteur de l'émetteur dans l'émetteur (1) ou le signal de sortie de l'émetteur à un point quelconque de la voie de transmission (2), indépendamment de la technique de modulation choisie pour la transmission de signaux, de façon, que des fractions spectrales individuelles dans le spectre de signaux de sortie de l'émetteur (1) soient élargies et ainsi la densité spectrale de puissance du signal de sortie de l'émetteur soit réduite sans augmentation essentielle de la largeur de bande du signal.

2. Arrangement selon la revendication 1,
**caractérisé en ce que** le signal à transmettre, le signal porteur de l'émetteur dans l'émetteur ou le signal de sortie de l'émetteur à un point quelconque de la voie de transmission est modulé indépendamment de l'impulsion d'horloge de transmission de façon, que le spectre de lignes du signal de sortie de l'émetteur soit élargi de manière, que la densité spectrale moyenne de puissance soit réduite par remplissage des lacunes entre les lignes du signal individuelles.

3. Arrangement selon la revendication 1 ou 2,
**caractérisé en ce qu'**une unité de commande (5) commande l'unité modulatrice (4).

4. Arrangement selon une quelconque des revendications 1 à 3,
**caractérisé en ce que** ledit émetteur (1) comprend un générateur d'impulsions d'horloge.

5. Arrangement selon la revendication 4,
**caractérisé en ce que** ladite unité modulatrice (4) commande ledit générateur d'impulsions d'horloge d'une façon appropriée afin d'élargir le spectre de lignes.

6. Arrangement selon la revendication 5,
**caractérisé en ce que** ladite unité modulatrice (4) induit une modulation de fréquence de la fréquence d'horloge dudit générateur d'impulsions d'horloge.

7. Arrangement selon la revendication 6,
**caractérisé en ce que** ledit générateur d'impulsions d'horloge comprend un élément VCO comme élément déterminant la fréquence.

8. Arrangement selon la revendication 7,
**caractérisé en ce que** ladite unité de commande (5) ajuste l'élément VCO.

9. Arrangement selon une quelconque des revendications 1 à 8,

**caractérisé en ce que** ladite unité modulatrice (4) induit une modulation de la fréquence, de la phase ou de l'amplitude du signal à transmettre, qui est un signal numérique en particulier.

10. Arrangement selon une quelconque des revendications 1 à 9,
    **caractérisé en ce que** ladite unité modulatrice (4) induit une modulation de fréquence ou de phase du signal porteur de l'émetteur dans ledit émetteur (1) ou du signal de sortie de l'émetteur à un point quelconque sur la voie de transmission (2), indépendamment de la technique de modulation choisie aux fins de transmission du signal.

11. Arrangement selon une quelconque des revendications 1 à 9,
    **caractérisé en ce qu'**au cas d'un signal porteur sous forme d'impulsion dudit émetteur (1) ou d'un signal de sortie de l'émetteur sous forme d'impulsion, une unité modulatrice (4) décale ou retarde des flancs de signal individuels vers des points de temps avant ou plus tard, en proportion au signal prédéterminé par un générateur de signal de modulation, qui est au plus disposé.

12. Arrangement selon la revendication 11,
    **caractérisé en ce que** ladite unité modulatrice (4) comprend un moyen de commande du retard pour l'analyse du signal de sortie de l'émetteur et pour la commande d'un circuit de temporisation, qui engendre ledit décalage ou respectivement le retard.

13. Arrangement selon la revendication 12,
    **caractérisé en ce que** ledit moyen de commande du retard comprend un moyen PLL, et **en ce que** ledit circuit de temporisation comprend un circuit à bascule.

14. Arrangement selon une quelconque des revendications 1 à 13,
    **caractérisé en ce que** ledit émetteur (1) comprend un moyen PLL.

15. Arrangement selon la revendication 14,
    **caractérisé en ce que** l'amplitude de modulation de ladite unité modulatrice (4) se trouve au-dedans de la gamme de commande du moyen PLL dudit émetteur (1).

16. Arrangement selon une quelconque des revendications 1 à 15,
    **caractérisé en ce qu'**un codage de données est réalisé moyennant un brouillage pseudo aléatoire, supplémentaire à la modulation par ladite unité modulatrice (4).

17. Arrangement selon une quelconque des revendications 1 à 16,
    **caractérisé en ce qu'**une unité de commande (5) est prévue dans ledit récepteur (3), qui commande ledit récepteur (3) de façon synchronisée sur la modulation par ladite unité modulatrice (4) dans ledit émetteur (1) ou à un point quelconque de la voie de transmission (2), de manière, qu'on puisse continuer le traitement du signal reçu dans ledit récepteur (3) au moins sans cette modulation additionnelle, à la synchronisation entre l'émetteur (1) ou respectivement la voie de transmission (2) et le récepteur (3) puissant, en option, être réalisée via le signal de modulation ou même via un signal ultérieur disponible en commun pour ledit émetteur (1) ou respectivement ladite voie de transmission (2) et ledit récepteur (3).

18. Arrangement selon une quelconque des revendications 1 à 17,
    **caractérisé en ce qu'**une voie de transmission supplémentaire est formée entre ledit émetteur (1) ou respectivement la voie de transmission (2) et ledit récepteur (3), le long de laquelle un signal de synchronisation supplémentaire est transmis pour la commande de la modulation de l'émetteur (1) ou respectivement la voie de transmission (2) et dudit récepteur (3).

19. Procédé de transmission de signal à un faible niveau de brouillage d'un signal et en particulier d'un signal numérique d'un émetteur (1) à un récepteur (3) en séparé en espace, qui sont, de préférence, mobiles l'un relativement à l'autre, via une voie de transmission (2) line-bound, à contact et/ou sans contact, notamment dans des transformateurs rotatifs,
    **caractérisé par** une modulation du signal à transmettre, du signal porteur de l'émetteur dans ledit émetteur (1) ou du signal de sortie de l'émetteur, qui se fait moyennant une unité modulatrice (4) à un point quelconque sur la voie de transmission (2), indépendamment de la technique de modulation choisie aux fins de transmission de signal, afin d'élargir le spectre de signaux de sortie dudit émetteur (1) par des fractions spectrales individuelles et ainsi afin de réduire la densité spectrale de puissance du signal de sortie de l'émetteur, sans augmentation essentielle de la largeur de bande du signal.

20. Procédé selon la revendication 19,
**caractérisé en ce que** ladite réduction de la densité spectrale de puissance moyenne est achevée par remplissage des lacunes entre les lignes de signal individuelles.

21. Procédé selon une quelconque des revendications 19 ou 20,
**caractérisé par** la commande de ladite unité modulatrice (4) moyennant une unité de commande (5).

22. Procédé selon une quelconque des revendications 19 à 21,
**caractérisé en ce que** ledit émetteur (1) comprend un générateur d'impulsions d'horloge.

23. Procédé selon la revendication 22,
**caractérisé par** commande appropriée dudit générateur d'impulsions d'horloge par ledit modulateur moyennant une commande appropriée dudit générateur d'impulsions d'horloge par ladite unité modulatrice (4) afin d'élargir le spectre de lignes.

24. Procédé selon la revendication 23,
**caractérisé par** modulation de fréquence de la fréquence d'horloge dudit générateur d'impulsions d'horloge par ladite unité modulatrice (4).

25. Procédé selon la revendication 24,
**caractérisé en ce que** ledit générateur d'impulsions d'horloge comprend un élément VCO comme élément déterminant la fréquence.

26. Procédé selon la revendication 25,
**caractérisé par** ajustement dudit élément VCO par ladite unité de commande (5).

27. Procédé selon une quelconque des revendications 19 à 26,
**caractérisé en ce que** ladite unité modulatrice (4) induit une modulation de fréquence, de phase ou de l'amplitude du signal à transmettre, qui est un signal numérique en particulier.

28. Procédé selon une quelconque des revendications 19 à 27,
**caractérisé en ce que** ladite unité modulatrice (4) induit une modulation de fréquence ou respectivement de phase du signal porteur de l'émetteur dans ledit émetteur (1) ou du signal de sortie de l'émetteur à un point quelconque sur la voie de transmission (2), indépendamment de la technique de modulation choisie aux fins de transmission du signal.

29. Procédé selon une quelconque des revendications 19 à 28,
**caractérisé en ce qu'**au cas d'un signal porteur sous forme d'impulsion dudit émetteur (1) ou un signal de sortie sous forme d'impulsion, une unité modulatrice (4) décale ou retarde des flancs de signal individuels vers des points de temps avant ou plus tard, en proportion au signal prédéterminé par un générateur de signal de modulation, qui est disposé au plus.

30. Procédé selon la revendication 29,
**caractérisé en ce que** ladite unité modulatrice (4) comprend un moyen de commande du retard pour l'analyse du signal de sortie de l'émetteur et pour la commande d'un circuit de temporisation, qui produit le décalage ou respectivement la temporisation.

31. Procédé selon la revendication 30,
**caractérisé en ce que** ledit moyen de commande du retard comprend un moyen PLL et **en ce que** ledit circuit de temporisation comprend un circuit à bascule.

32. Procédé selon une quelconque des revendications 19 à 31,
**caractérisé en ce que** ledit émetteur (1) comprend un moyen PLL.

33. Procédé selon la revendication 32,
**caractérisé en ce que** l'amplitude de modulation de ladite unité modulatrice se trouve au-dedans de la gamme de commande des moyens PLL dudit émetteur (1).

**34.** Procédé selon une quelconque des revendications 19 à 33,
**caractérisé en ce qu'**un codage de données moyennant de brouillage pseudo aléatoire est réalisé au plus de la modulation par ladite unité modulatrice (4).

**35.** Procédé selon une quelconque des revendications 19 à 34,
**caractérisé en ce qu'**une unité de commande (5) est disposée dans ledit récepteur (3), qui commande le récepteur (3) de manière synchronisée sur la modulation par ladite unité modulatrice (4) dans ledit émetteur (1) ou à un point quelconque de ladite voie de transmission (2), de façon, qu'on puisse continuer le traitement du signal reçu dans ledit récepteur (3) au moins sans cette modulation supplémentaire, à la synchronisation entre ledit émetteur (1) ou respectivement la voie de transmission (2) et ledit récepteur (3) puissant se faire, en option, via le signal de modulation ou même via un autre signal disponible en commun pour ledit émetteur (1) ou respectivement ladite voie de transmission (2) et ledit récepteur (3).

**36.** Procédé selon une quelconque des revendications 18 à 33,
**caractérisé en ce qu'**une voie de transmission supplémentaire est disposée entre ledit émetteur (1) ou respectivement la voie de transmission (2) et ledit récepteur (3), le long de laquelle un signal de synchronisation supplémentaire est transmis pour la commande de la modulation dudit émetteur (1) ou respectivement de la voie de transmission (2) et dudit récepteur (3).

## FIG 1

## FIG 14

## FIG 2

— MES SRÜ AVG verti 8    LIM EN 55011 F AV Fast3m

## FIG 3

— MES SRÜ AVG verti 9    LIM EN 55011 F AV Fast3m

FIG 4    Tek Run: 10.0GS/s ET Sample

Ch1  200mVΩ  Ch2  1.00VΩ  M5.00ns  Ch 1 ╱  72mV

FIG 5    CH1 S Spectrum      10 dB/ REF 0 dBm

REWW 30 kHz VBW 30 kHz   ATW 10 dB  SWP 4.48 sec
START 0Hz                                    STOP 1 GHz

FIG 6    Tek Stop: Single Seq 2.00GS/s

[..........................................]

Ch1  200mVΩ  Ch2  1.00VΩ  M5.00ns  Ch 1 ╱  72mV

FIG 7    CH1 S Spectrum    10 dB/ REF 0 dBm

REWW 30 kHz VBW 30 kHz   ATW 10 dB  SWP 4.46 sec
START 0Hz                          STOP 1 GHz

**FIG 8**

CH1 S Spectrum     10 dB/ REF 0 dBm

Hld

REWW 30 kHz VBW 30 kHz   ATW 10 dB  SWP 60 msec
CENTER 100MHz                          SPAN 10 MHz

**FIG 9**

Tek Run: 10.0GS/s ET Sample    instaV

1

2

Ch1  200mVΩ  Ch2  1.00VΩ   M5.00ns  Ch 1 ╱   72mV

FIG 10

CH1 S Spectrum    10 dB/ REF 0 dBm

REWW 1 kHz VBW 1 kHz   ATW 10 dB  SWP 6.253 sec
CENTER 100MHz                     SPAN 10 MHz

FIG 11

CH1 S Spectrum     10 dB/ REF 0 dBm

REWW 1 kHz VBW 1 kHz   ATW 10 dB  SWP 6.253 sec
CENTER 100MHz                     SPAN 10 MHz

# FIG 12

CH1 S Spectrum     10 dB/ REF 0 dBm

REWW 1 kHz VBW 1 kHz   ATW 10 dB   SWP 6.253 sec
CENTER 100MHz                                    SPAN 10 MHz

# FIG 13

— Data Input

— Pseudo Noise

— Link Output

— Link Input

— Pseudo Noise

— Data Output

EP 1 051 816 B1

**FIG 15**

CH1 S Spectrum      10 dB/ REF 0 dBm      -89.763 dBm

100.5 MHz

REWW 10 kHz VBW 10 kHz   ATW 10 dB  SWP 40 msec
CENTER 100MHz                         SPAN 1 MHz

**FIG 16**

CH1 S Spectrum      10 dB/ REF 0 dBm      -89.763 dBm

100.5 MHz

REWW 10 kHz VBW 10 kHz   ATW 10 dB  SWP 40 msec
CENTER 100MHz                         SPAN 1 MHz

28

## FIG 17

## FIG 18

CH1 S Spectrum    10 dB/ REF 0 dBm    -87.489 dBm

100 MHz

Max

REWW 30 kHz VBW 30 kHz   ATW 10 dB   SWP 4.46 sec
START 0MHz                              STOP 1 GHz

**FIG 19**

CH1 S Spectrum      10 dB/ REF 0 dBm      -37.332 dBm

100.5 MHz

Max

REWW 100 kHz VBW 100 kHz   ATW 10 dB   SWP 100 msec
CENTER 100MHz                                    SPAN 100 MHz

**FIG 20**

Tek Stop: 10.0GS/s 6.863M Acqs

Ch1  200mVΩ   Ch2  1.00VΩ   M5.00ns  Ch 1 ╱   68mV

30

## FIG 21

## FIG 22

CH1 S Spectrum     10 dB/ REF 0 dBm     -14.748 dBm

REWW 30 kHz VBW 30 kHz   ATW 10 dB  SWP 4.46 sec
START 0 Hz                                STOP 1 GHz

**FIG 23**

CH1 S Spectrum    10 dB/ REF 0 dBm    -20.61 dBm

00 MHz

REWW 30 kHz VBW 30 kHz   ATW 10 dB   SWP 4.46 sec
START 0 Hz                              STOP 1 GHz

**FIG 24**

CH1 S Spectrum    10 dB/ REF 0 dBm    -25.269 dBm

00 MHz

REWW 30 kHz VBW 30 kHz   ATW 10 dB   SWP 4.46 sec
START 0 Hz                              STOP 1 GHz

**FIG 25**

CH3 S Spectrum      10 dB/ REF 0 dBm     -32.469 dBm

5 MHz

REWW 300 kHz VBW 300 kHz ATW 10 dB  SWP 340 msec
START 0 Hz                                      STOP 1 GHz